# EUROPÄISCHE PATENTSCHRIFT

(11) **EP 3 387 283 B1**
(45) Veröffentlichungstag und Bekanntmachung des Hinweises auf die Patenterteilung: **17.02.2021**
(21) Anmeldenummer: 16809029.8
(22) Anmeldetag: 08.12.2016
(51) Int. Cl.: F16D 41/20, F16D 43/02, F02B 75/04

(54) **KUPPLUNGSVORRICHTUNG UND SCHALTVORRICHTUNG**
CLUTCH DEVICE AND SWITCHING DEVICE
DISPOSITIF D'ACCOUPLEMENT ET DISPOSITIF DE CHANGEMENT DE VITESSES

(30) Priorität: 10.12.2015 DE 102015224908
(43) Veröffentlichungstag der Anmeldung: 17.10.2018
(73) Patentinhaber: Volkswagen Aktiengesellschaft, 38440 Wolfsburg (DE)
(72) Erfinder: CORNELIUS, Volker, 38162 Cremlingen (DE)
(86) Internationale Anmeldenummer: PCT/EP2016/080329
(87) Internationale Veröffentlichungsnummer: WO 2017/097935

(56) Entgegenhaltungen:
- DE-A1- 19 907 483
- DE-A1-102004 053 225
- DE-A1-102009 009 528
- JP-A- H11 294 210

## Beschreibung

Die Erfindung betrifft eine Kupplungsvorrichtung zur bedarfsweisen Übertragung eines Drehmoments zwischen einem um eine Rotationsachse drehbaren Antriebselement und einem um eine Rotationsachse drehbaren Abtriebselement, die kraftschlüssig mittels eines Kupplungselements koppelbar sind. Die Erfindung betrifft weiterhin eine Schaltvorrichtung mit einer oder mehreren Kupplungsvorrichtungen, mittels der ein erstes Element und ein zweites Element in einer oder mehreren Drehausrichtungen relativ zueinander positionierbar sind.

Aus der DE 199 07 483 A1 ist eine Verstellvorrichtung für beispielsweise einen Fensterheber oder eine Sitzverstellung in einem Kraftfahrzeug bekannt, die es ermöglicht, ein auf ein Antriebselement ausgeübtes Drehmoment in den zwei möglichen Drehrichtungen auf ein Abtriebselement zu übertragen, während andererseits eine Übertragung eines Drehmoments ausgehend von dem Abtriebselement auf das Antriebselement mittels einer mit ihrer Außenseite an der Innenseite eines konisch zulaufenden Gehäuses kraftschlüssig angreifenden Schlingfeder verhindert wird. Die Schlingfeder blockiert somit eine Drehbewegung von sowohl dem Abtriebselement als auch dem Abtriebselement, wenn das Abtriebselement mit einem Drehmoment beaufschlagt wird, während sich diese bei einer Beaufschlagung des Antriebselements mit einem Drehmoment zusammenzieht und somit enger gewickelt wird, wodurch der Anpressdruck zwischen dieser und der Innenseite des Gehäuses reduziert und die Blockade aufgehoben wird. Die Verstellvorrichtung soll beispielsweise ein aktives Verstellen einer Sitzlehne in einem Kraftfahrzeug ermöglichen, gleichzeitig jedoch ein selbsttätiges Verstellen infolge einer Krafteinwirkung auf die Sitzlehne vermeiden.

Die US 6,394,247 B1 offenbart einen Keilriementrieb einer Brennkraftmaschine, wobei zwischen einem Riemenrad und der Antriebswelle eines anzutreibenden Nebenaggregats, beispielsweise eines Generators, eine Schlingfederkupplung angeordnet ist, die radial wirkend und kraftschlüssig eine Übertragung eines Drehmoments von dem Riemenrad auf die Antriebswelle gewährleistet, im umgekehrten Fall jedoch öffnet und somit die Übertragung eines Drehmoments von der Antriebswelle des Nebenaggregats auf das Riemenrad verhindert. Dadurch soll insbesondere erreicht werden, dass bei einer plötzlichen Lastwegnahme ausgehend von einem Betrieb der Brennkraftmaschine mit relativ hohen Drehzahlen der Kurbelwelle und damit auch der Antriebswelle des Nebenaggregats eine trägheitsbedingte Überdrehzahl der Antriebswelle des Nebenaggregats auf das dazugehörige Riemenrad übertragen wird, was ansonsten in Verbindung mit der durch die Lastwegnahme abbremsenden Wirkung für die Drehzahl der Kurbelwelle zu einem erhöhten Schlupf zwischen dem Keilriemen und dem Riemenrad des Nebenaggregats führen könnte.

Eine Schlingfederkupplung, wie sie beispielsweise aus der US 6,394,247 B1 bekannt ist, stellt eine konstruktiv einfache und gleichzeitig betriebssichere, kraftschlüssig wirkende Kupplungsvorrichtung dar. Nachteilig an dieser ist jedoch der relativ große Bauraum, den diese infolge ihrer radialen Wirkungsweise in radialer Richtung bezüglich der Rotationsachsen der über diese koppelbaren Antriebs- und Abtriebselemente erfordert.

Die DE 10 2004 053 225 A1 offenbart eine Brennkraftmaschine, bei der der Kolbenhub mittels einer Exzenterhülse einstellbar ist, indem die innerhalb eines Pleuelauges eines Pleuels angeordnete Exzenterhülse, die einen Kurbelzapfen einer Kurbelwelle drehbar aufnimmt, in zwei Drehausrichtungen bezüglich des Pleuels mittels einer Sperrvorrichtung sperrbar ist. Weiterhin ist eine kraftschlüssig wirkende Kupplungsvorrichtung vorgesehen ist, mittels der die Exzenterhülse temporär an die Kurbelwelle koppelbar ist, um die Exzenterhülse relativ zu dem Pleuel zu verdrehen. Diese Kupplungsvorrichtung ist derart ausgebildet ist, dass die Exzenterhülse hydraulisch auf dem Kurbelzapfen der Kurbelwelle verschiebbar ist, wodurch diese bedarfsweise an eine in die Kurbelwelle integrierte Kupplungsscheibe angedrückt wird, so dass dann temporär die Exzenterhülse mit dem Kurbelzapfen der Kurbelwelle mitdreht.

Ausgehend von diesem Stand der Technik lag der Erfindung die Aufgabe zugrunde, eine kraftschlüssig wirkende Kupplungsvorrichtung anzugeben, die konstruktiv einfach ausgebildet ist und im Vergleich zu einer konventionellen Schlingfederkupplung weniger Bauraum in radialer Richtung bezüglich der Rotationsachsen der über diese koppelbaren Antriebs- und Abtriebselemente erfordert.

Diese Aufgabe wird mittels einer Kupplungsvorrichtung gemäß dem Patentanspruch 1 gelöst. Eine mindestens eine erfindungsgemäße Kupplungsvorrichtung umfassende Schaltvorrichtung ist Gegenstand des Patentanspruchs 9. Vorteilhafte Ausgestaltungen der erfindungsgemäßen Kupplungsvorrichtung und/oder der erfindungsgemäßen Schaltvorrichtung sind Gegenstände der weiteren Patentansprüche und ergeben sich aus der nachfolgenden Beschreibung der Erfindung.

Eine erfindungsgemäße Kupplungsvorrichtung zur bedarfsweisen Übertragung eines Drehmoments zwischen einem um eine Rotationsachse drehbaren Antriebselement und einem um eine Rotationsachse (die insbesondere koaxial zu der Rotationsachse des Antriebselements ausgerichtet sein kann) drehbaren Abtriebselement, wozu diese kraftschlüssig mittels eines Kupplungselements koppelbar sind, ist dadurch gekennzeichnet, dass das Antriebselement und das Abtriebselement jeweils eine Kupplungsfläche ausbilden, die einen Kupplungsspalt mit in einer bezüglich zumindest einer der Rotationsachsen radialen Richtung abnehmender Spaltbreite ausbilden, wobei das Kupplungselement in eine erste Stellung und eine zweite Stellung bringbar ist, die sich hinsichtlich der radialen Position innerhalb des Kupplungsspalts und damit hinsichtlich des Anpressdrucks zwischen dem Kupplungselement und den Kupplungsflächen unterscheiden. Eine solche Kupplungsvorrichtung wird demnach radial betätigt, wirkt jedoch primär in axialer Richtung, d.h. die normal gerichteten Druckkräfte, die in den kontaktierenden Kupplungsflächen einen Kraftschluss bewirken, sind zumindest mehr in axialer Richtung bezüglich der Rotationsachsen der Antriebs- und Abtriebselemente als radial dazu ausgerichtet.

Eine erfindungsgemäße Kupplungsvorrichtung ermöglicht grundsätzlich eine (auch ausschließliche) axiale Anordnung der diese ausbildenden (Haupt-)Komponenten, d.h. des Antriebselements, des/der Kupplungselements/-e und des Abtriebselements, wodurch die Größe einer solchen Kupplungsvorrichtung zumindest in radialer Richtung bezüglich der Rotationsachsen gering gehalten werden kann. Gleichzeitig kann eine solche Kupplungsvorrichtung konstruktiv sehr einfach ausgebildet sein und dennoch eine sichere Funktionsweise gewährleisten.

Vorzugsweise kann vorgesehen sein, dass die erste Stellung des Kupplungselements durch einen relativ großen Anpressdruck und die zweite Stellung durch einen relativ kleinen Anpressdruck gekennzeichnet ist. Weiterhin bevorzugt kann vorgesehen sein, dass der Anpressdruck in einer (insbesondere der ersten) der Stellungen des Kupplungselements so groß ist, dass sich eine im Wesentlichen schlupffreie Mitnahme des Abtriebselements durch das Antriebselement einstellt. Ebenfalls bevorzugt kann vorgesehen sein, dass der Anpressdruck in der anderen (insbesondere der zweiten) der Stellungen des Kupplungselements möglichst gering und insbesondere im Wesentlichen null ist, so dass in vorteilhafter Weise bei geöffneter Kupplungsvorrichtung Reibungsverluste infolge einer kontaktierenden Relativbewegung zwischen den Kupplungsflächen des Antriebs- und Abtriebselements einerseits und des Kupplungselements andererseits so weit wie möglich vermieden werden.

In einer bevorzugten Ausgestaltung kann vorgesehen sein, dass die erfindungsgemäße Kupplungsvorrichtung Mittel zur elastischen Beaufschlagung des Kupplungselements aufweist. Dadurch kann erreicht werden, dass das Kupplungselement selbsttätig beziehungsweise infolge einer elastischen Beaufschlagung in eine Ausgangsstellung bewegt beziehungsweise in einer solchen Ausgangsstellung gehalten werden kann, wobei diese Ausgangsstellung sowohl einem teilweise oder vollständig geschlossenen Zustand der Kupplungsvorrichtung als auch einem (vollständig) geöffneten Zustand der Kupplungsvorrichtung entsprechen kann. In einem teilweise geschlossenen Zustand erfolgt eine Übertragung eines Drehmoments und damit eine Drehbewegung zwischen dem Antriebselement und dem Abtriebselement mit gewolltem Schlupf, während ein solcher gewollter Schlupf im vollständig geschlossenen Zustand nicht vorgesehen ist. Im (vollständig) geöffneten Zustand der Kupplungsvorrichtung wird dagegen vorzugsweise im Wesentlichen kein Drehmoment und damit keine Drehbewegung zwischen dem Antriebselement und dem Abtriebselement übertragen. Bei dem Mittel zur elastischen Beaufschlagung des Kupplungselements kann es sich beispielsweise um ein separates Federelement handeln. Ebenfalls kann es sich bei diesem Mittel um das entsprechend elastisch auslenkbar ausgebildete Kupplungselement selbst handeln.

In einer weiterhin bevorzugten Ausgestaltung kann vorgesehen sein, dass die kraftschlüssig wirkende Kupplungsvorrichtung selbstverstärkend ausgebildet ist, so dass Reibungskräfte, die zwischen den Kupplungsflächen des Antriebs- und des Abtriebselements einerseits und des Kupplungselements andererseits infolge einer Ausgangsbelastung wirken, aus insbesondere geometrischen Gründen ein weitergehendes Einziehen des Kupplungselements in den schmaler werdenden Kupplungsspalt bewirken, was mit einer entsprechenden Erhöhung des Anpressdrucks einhergeht. Mittels einer solchen Kupplungsvorrichtung können mit einer relativ geringen Ausgangsbelastung relativ hohe und insbesondere sich bis zu einer schlupffreien Koppelung selbstverstärkende Reibungskräfte erzeugt werden. Die Ausgangsbelastung für das Kupplungselement einer solchen Kupplungsvorrichtung kann sich insbesondere aus einer elastischen Beaufschlagung des Kupplungselements ergeben. Alternativ oder zusätzlich dazu kann sich diese auch infolge von Trägheitskräften (insbesondere Gravitations- und/oder Fliehkräfte) ergeben. Ebenfalls kann vorgesehen sein, diese Ausgangsbelastung aktiv mittels eines Aktors aufzubringen.

In einer Ausgestaltung der erfindungsgemäßen Kupplungsvorrichtung kann vorgesehen sein, dass das Kupplungselement die erste Stellung (die vorzugsweise einem zumindest teilweise geschlossenen Zustand der Kupplungsvorrichtung entspricht) im elastisch nicht-beaufschlagten Zustand oder infolge einer konstruktiven elastischen Beaufschlagung einnimmt, während sich die zweite Stellung (die vorzugsweise einem geöffneten Zustand der Kupplungsvorrichtung entspricht) infolge einer Überdrehzahl des Abtriebselements einstellt. Eine solche Kupplungsvorrichtung kann demnach insbesondere selbsttätig in Abhängigkeit der Richtung eines vorgesehenen Leistungsflusses öffnen oder schließen, so dass ein Antreiben des Abtriebselements durch das Antriebselement infolge eines diese kraftschlüssig koppelnden Kupplungselements ermöglicht ist, während ein (ungewollter) Antrieb des Antriebselements durch das Abtriebselement infolge einer insbesondere temporär höheren Drehzahl des Abtriebselements im Vergleich zum Antriebselements durch eine Bewegung des Kupplungselements in eine geöffnete Stellung unterbunden werden kann.

Als eine "konstruktive elastische Beaufschlagung" wird eine Vorspannung eines das Kupplungselement beaufschlagenden Federelements oder des selbst elastisch ausgelenkten Kupplungselements verstanden, die sich ohne aktive Beeinflussung des Federelements oder des Kupplungselements infolge einer konstruktiven Integration in die Kupplungsvorrichtung durch eine Abstützung von zwei Abschnitten (insbesondere Endabschnitten) des Federelements an Elementen der Kupplungsvorrichtung einstellt.

In einer weiteren bevorzugten Ausgestaltung einer erfindungsgemäßen Kupplungsvorrichtung kann auch vorgesehen sein, dass das Kupplungselement die erste Stellung im elastisch nicht-beaufschlagten Zustand oder infolge einer konstruktiven elastischen Beaufschlagung einnimmt, während die zweite Stellung mittels einer aktiven Einstellvorrichtung einstellbar ist beziehungsweise eingestellt wird. Eine solche Ausgestaltung ermöglicht eine flexible, völlig bedarfssteuerbare Betätigung der Kupplungsvorrichtung.

Vorzugsweise kann vorgesehen sein, dass die Kupplungsfläche(n) des Antriebselements und/oder des Abtriebselements (und vorzugsweise auch eine oder mehrere Kupplungsflächen des Kupplungselements) in einem Winkel bezüglich derjenigen Ebene, die radial zu der/den Rotationsachse(n) des Antriebselements und/oder des Abtriebselements ausgerichtet ist, angeordnet sind, der ≤ 5° und vorzugsweise ca. 3° beträgt. Kleinere Winkel können bei bestimmten Ausgestaltungen der Kupplungsvorrichtung eine so große selbsthemmende Wirkung für das infolge der Reibungskräfte weiter in den Kupplungsspalt gezogenen Kupplungselements bewirken, dass dadurch ein Lösen der Kupplungsvorrichtung erschwert wird. Bei einem zu großen Winkel können dagegen relativ große radial gerichtete Kräfte erforderlich sein, um den erforderlichen Anpressdruck zwischen den Kupplungsflächen des Antriebs- und des Abtriebselements sowie des Kupplungselements zu erreichen.

Weiterhin bevorzugt kann vorgesehen sein, dass die Einstellvorrichtung ein verstellbares Anschlagelement für das Kupplungselement aufweist. Dieses kann derart ausgebildet sein, dass es aktivierbar und deaktiverbar ist, wobei es im aktivierten Zustand einen Anschlag für das Kupplungselement ausbildet und im deaktivierten Zustand keinen Anschlag für das Kupplungselement ausbildet. Dazu kann besonders bevorzugt vorgesehen sein, dass bei deaktiviertem Anschlagelement das Kupplungselement infolge eines elastisch nicht-beaufschlagten Zustands oder einer konstruktiven elastischen Beaufschlagung so weit in den Kupplungsspalt hinein bewegt ist, dass (gegebenenfalls in Verbindung mit einer selbstverstärkenden Wirkung der Kupplungsvorrichtung) das Abtriebselement von dem Antriebselement angetrieben wird, während bei einem aktivierten Anschlagelement ein auf dieses infolge einer (noch erfolgenden) Verdrehung des Abtriebselements oder des Antriebselements auftreffender Abschnitt des Kupplungselements dazu führt, dass dieses so weit aus dem schmaler werdenden Kupplungsspalt herausgeführt wird, dass kein Antrieb des Abtriebselements durch das Antriebselement mehr erfolgt und insbesondere im Wesentlichen auch keine relevante Reibung zwischen den Kupplungsflächen des Abtriebselements und des Antriebselements sowie des Kupplungselements mehr gegeben ist.

In einer bevorzugten Ausgestaltung der erfindungsgemäßen Kupplungsvorrichtung kann vorgesehen sein, dass das Kupplungselement Kupplungsflächen ausbildet, die zu den Kupplungsflächen des Antriebselements und des Abtriebselements parallel ausgerichtet sind. Dadurch kann eine vorteilhafte kraftschlüssige Wirkung zwischen den jeweils zusammenwirkenden Kupplungsflächen erreicht werden.

Eine erfindungsgemäße Schaltvorrichtung, mittels der ein erstes Element und ein zweites Element in mindestens einer Drehausrichtung relativ zueinander positionierbar sind, ist dadurch gekennzeichnet, dass mindestens eine erfindungsgemäße Kupplungsvorrichtung vorgesehen ist, wobei das erste Element als Abtriebselement der Kupplungsvorrichtung dient, das bei geschlossener Kupplungsvorrichtung von dem Antriebselement der Kupplungsvorrichtung relativ zu dem zweiten Element in die Drehausrichtung drehbar ist, während beim Erreichen dieser Drehausrichtung die Kupplungsvorrichtung (insbesondere selbsttätig) lösbar ist beziehungsweise gelöst wird.

Eine solche Schaltvorrichtung kann vorzugsweise weiterhin ein Sperrelement zur vorzugsweise formschlüssigen, die Drehausrichtung sichernden Verbindung zwischen dem ersten Element und dem zweiten Element umfassen. Somit kann eine gesicherte Positionierung beziehungsweise Drehausrichtung der zwei Elemente zueinander erreicht werden, während die Kupplungsvorrichtung für ein funktionssicheres und schnelles Verdrehen des ersten Elements beziehungsweise Abtriebselements mittels des Antriebselements sorgen kann, wenn das Sperrelement nicht aktiviert ist.

Weiterhin bevorzugt kann vorgesehen sein, dass das (vorzugsweise formschlüssig wirkende) Sperrelement auch als Anschlagelement der Kupplungsvorrichtung dient. Für das Sperrelement kann demnach eine konstruktiv vorteilhafte Doppelfunktion realisiert werden.

In einer bevorzugten Ausgestaltung einer erfindungsgemäßen Schaltvorrichtung mit aktiver Einstellvorrichtung können mindestens zwei Kupplungsvorrichtungen vorgesehen sein, wobei die zweite (insbesondere gelöste) Stellung des Kupplungselements einer ersten der Kupplungsvorrichtungen mittels der Einstellvorrichtung in einer ersten Drehausrichtung des (für beide Kupplungsvorrichtungen identischen) ersten Elements (beziehungsweise Abtriebselements) relativ zu dem zweiten Element einstellbar ist und die zweite (insbesondere gelöste) Stellung des Kupplungselements einer zweiten der Kupplungsvorrichtungen mittels der Einstellvorrichtung in einer zweiten Drehausrichtung des ersten Elements (beziehungsweise Abtriebselements) relativ zu dem zweiten Element einstellbar ist. Eine solche Ausgestaltung kann ein Bewirken oder Unterbinden eines Mitnehmens des Abtriebselements durch das Antriebselement in den mindestens zwei Drehausrichtungen oder aus diesen Drehausrichtungen heraus vereinfachen und insbesondere eine vergleichsweise konstruktiv einfache Ausgestaltung für eine (das oder die Sperrelemente umfassende) Sperrvorrichtung und/oder Einstellvorrichtung der Schaltvorrichtung ermöglichen.

Insbesondere kann dadurch auch ermöglicht werden, dass ein (gegebenenfalls als Anschlagelement dienendes) Sperrelement der ersten Kupplungsvorrichtung, mittels dessen das erste Element (beziehungsweise Abtriebselement) in einer ersten Drehausrichtung relativ zu dem zweiten Element sperrbar ist, und ein (gegebenenfalls als Anschlagelement dienendes) Sperrelement der zweiten Kupplungsvorrichtung, mittels dessen das erste Element (beziehungsweise Abtriebselement) in einer zweiten Drehausrichtung relativ zu dem zweiten Element sperrbar ist, mittels eines gemeinsamen Betätigungselements alternierend betätigbar sind.

In einer Ausgestaltung der erfindungsgemäßen Schaltvorrichtung kann auch vorgesehen sein, dass das Betätigungselement zusätzlich als Anschlagelement der Kupplungsvorrichtungen dient, mittels dessen die Kupplungselemente vorzugsweise in die jeweils einem gelösten Zustand der dazugehörigen Kupplungsvorrichtung entsprechende Stellung bewegt werden können. Diese Doppelfunktion für das Betätigungselement kann zu einer relativ einfachen konstruktiven Ausgestaltung der erfindungsgemäßen Schaltvorrichtung führen.

Insbesondere zur Erzielung einer möglichst sicheren Sperrung des ersten Elements in einer der Drehausrichtungen relativ zu dem zweiten Element kann vorgesehen sein, dass das Betätigungselement in mindestens zwei Betätigungsendstellungen mittels einer Rastsicherung lagesicherbar ist. Diese Rastsicherung ist dabei vorzugsweise derart ausgelegt, dass diese durch eine aktive Einwirkung mit dem Ziel eines Umschaltens des Betätigungselements durch ausschließlich eine Krafteinwirkung lösbar ist, hierzu jedoch Kräfte erforderlich sind, die in einem normalen Betrieb einer die Schaltvorrichtung umfassenden Vorrichtung nicht in der entsprechenden Richtung auf das Betätigungselement einwirken.

Eine erfindungsgemäße Schaltvorrichtung kann weiterhin bevorzugt dadurch gekennzeichnet sein, dass
- in der ersten Drehausrichtung des ersten Elements (beziehungsweise Abtriebselements) relativ zu dem zweiten Element, in der die zweite Stellung des Kupplungselements der ersten Kupplungsvorrichtung mittels einer Einstellvorrichtung eingestellt ist, die zweite Stellung des Kupplungselements der zweiten Kupplungsvorrichtung mittels eines passiven Einstellelements eingestellt ist und
- in der zweiten Drehausrichtung des ersten Elements (beziehungsweise Abtriebselements) relativ zu dem zweiten Element, in der die zweite Stellung des Kupplungselements der zweiten Kupplungsvorrichtung mittels der Einstellvorrichtung eingestellt ist, die zweite Stellung des Kupplungselements der ersten Kupplungsvorrichtung mittels eines passiven Einstellelements eingestellt ist.
Dadurch wird insbesondere ermöglicht, dass in jeder der Drehausrichtungen des ersten Elements (beziehungsweise Abtriebselements) relativ zu dem zweiten Element lediglich eine der Kupplungsvorrichtungen aktiv beeinflusst werden muss, um diese geöffnet zu halten oder zu schließen, während die andere Kupplungsvorrichtung durch das passive Einstellelement ausschließlich infolge der jeweiligen Drehausrichtung des ersten Elements (beziehungsweise Abtriebselements) selbsttätig offen gehalten wird. Wird dann die in der jeweiligen Drehausrichtung aktiv beeinflusste Kupplungsvorrichtung geschlossen, kann die durch diese Kupplungsvorrichtung bewirkte Mitnahme des ersten Elements (beziehungsweise Abtriebselements) zu einem Überwinden des die andere Kupplungsvorrichtung offen haltenden passiven Einstellelements bewirken, so dass anschließend beide Kupplungsvorrichtungen das Mitnehmen des ersten Elements (beziehungsweise Abtriebselements) durch das Antriebselement sicherstellen, bis die entsprechende andere Drehausrichtung erreicht ist. Dann kann die zuvor mittels des passiven Einstellelements offen gehaltene Kupplungsvorrichtung aktiv beeinflusst werden, während die zuvor aktiv beeinflusste Kupplungsvorrichtung durch das dazugehörige passive Einstellelement selbsttätig offen gehalten wird.

Weiterhin kann vorgesehen sein, dass
- in der ersten Drehausrichtung des ersten Elements (beziehungsweise Abtriebselements) relativ zu dem zweiten Element das Sperrelement der zweiten Kupplungsvorrichtung mittels des Betätigungselements in einer Lösestellung gehalten ist, während das Sperrelement der ersten Kupplungsvorrichtung mittels eines zwischen den Sperrelementen abgestützten Federelements in eine Sperrstellung beaufschlagt ist und
- in der zweiten Drehausrichtung des ersten Elements (beziehungsweise Abtriebselements) relativ zu dem zweiten Element das Sperrelement der ersten Kupplungsvorrichtung mittels des Betätigungselements in einer Lösestellung gehalten ist, während das Sperrelement der zweiten Kupplungsvorrichtung mittels des Federelements in eine Sperrstellung beaufschlagt ist.
Dadurch kann eine konstruktiv vorteilhafte Ausgestaltung für das zur Betätigung beider Sperrelemente vorgesehene Betätigungselement erreicht werden.

Weiterhin kann für eine erfindungsgemäße Schaltvorrichtung vorgesehen sein, dass das oder die (vorzugsweise an dem zweiten Element verschiebbar gelagerte(n)) Sperrelement(e) in (jeweils) eine Sperrvertiefung des zweiten Elements oder (vorzugsweise) des ersten Elements bewegbar ist/sind, wobei die Sperrvertiefung(en) bezüglich einer Umlaufbahn des Sperrelements), auf der dieses relativ zu dem die Sperrvertiefung(en) ausbildenden Bauteil bei einer Relativdrehung zwischen dem ersten Element und dem zweiten Element umläuft, eine größere Abmessung als der für ein Eingreifen in die Sperrvertiefung(en) vorgesehene Teil des/der Sperrelements/-e aufweist. Der Begriff "Sperrvertiefung" soll dabei auch eine Durchgangsöffnung erfassen, in die ein Sperrelement oder zumindest ein Teil davon zur Ausbildung einer formschlüssig wirkenden Sperre eingreifen kann. Eine solche bezüglich der Umlaufbahn des Sperrelements relativ große Sperrvertiefung kann ein sicheres Eingreifen des Sperrelements auch bei großen Relativwinkelgeschwindigkeiten zwischen dem Sperrelement und dem die Sperrvertiefung ausbildenden Bauteil gewährleisten.

Um eine Beweglichkeit zwischen dem Sperrelement beziehungsweise dem das Sperrelement tragenden Bauteil (insbesondere das zweite Element) und dem die Sperrvertiefung ausbildenden Bauteil (insbesondere das erste Element) bei in die Sperrvertiefung eingreifendem Sperrelement trotz einer solchen relativ großen Sperrvertiefung möglichst zu vermeiden oder zu beschränken, kann vorzugsweise weiterhin ein Rücklaufsperrelement vorgesehen sein, das gemeinsam mit dem Sperrelement in die Sperrvertiefung eingreifen kann und dadurch denjenigen Abschnitt der Sperrvertiefung, in dem das Sperrelement nach dem Eingreifen in die Sperrvertiefung nicht angeordnet ist, zumindest teilweise ausfüllen kann.

Um eine automatische Funktion des Rücklaufsperrelements zu erreichen kann vorgesehen sein, dass dieses vorzugsweise auf der dem Sperrelement zugewandten Seite derart abgeschrägt ausgebildet ist, dass dieses infolge eines Kontakts mit dem Rand der Sperrvertiefung aus der Sperrvertiefung heraus bewegbar ist, wobei dieses Herausbewegen weiterhin bevorzugt zu einer (zunehmenden) Vorspannung eines Federelements führt. Diese Vorspannung des Federelements kann dann ein erneutes Eingreifen des Rücklaufsperrelements in die/eine Sperrvertiefung gewährleisten, wenn diese erneut oder eine andere Sperrvertiefung infolge einer Verdrehung des ersten Elements relativ zu dem zweiten Element entsprechend zu dem Rücklaufsperrelement positioniert ist.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausführungsbeispielen näher erläutert. In den Zeichnungen zeigt:
- Fig. 1:: einen teilweisen perspektivischen Querschnitt durch Komponenten einer Brennkraftmaschine mit einer erfindungsgemäßen Schaltvorrichtung in einer ersten Ausführungsform;
- Fig. 2:: in isolierter Darstellung Teile der Schaltvorrichtung und daran angrenzende Komponenten der Brennkraftmaschine in einer perspektivischen Ansicht;
- Fig. 3:: die Komponenten gemäß der Fig. 2 in einer weiteren perspektivischen Ansicht;
- Fig. 4:: die Komponenten gemäß den Fig. 2 und 3 (jedoch ohne Betätigungsschiene der Brennkraftmaschine) in einer weiteren perspektivischen Ansicht;
- Fig. 5:: die Komponenten gemäß der Fig. 4 in einer weiteren perspektivischen Ansicht;
- Fig. 6:: die Komponenten gemäß den Fig. 4 und 5 in einer weiteren perspektivischen Ansicht;
- Fig. 7:: in einem Ausschnitt eine Ansicht von unten auf die Komponenten gemäß den Fig. 4 bis 6 mit einem Betätigungselement der Schaltvorrichtung in einer ersten Stellung;
- Fig. 8:: einen Radialschnitt durch einen Abschnitt einer Kurbelwelle, eines Pleuels, einer Exzenterhülse, einer Einstell- und einer Sperrvorrichtung sowie zwei Kupplungsvorrichtungen der Brennkraftmaschine, wobei sich ein erstes Sperrelement der Sperrvorrichtung in einer Sperrstellung und ein zweites Sperrelement der Sperrvorrichtung in einer Lösestellung befindet;
- Fig. 9:: eine Ansicht gemäß der Fig. 7 mit dem Betätigungselement in einer zweiten Stellung;
- Fig. 10:: eine Ansicht gemäß der Fig. 8, wobei sich nunmehr jedoch das erste Sperrelement in einer Lösestellung und das zweite Sperrelement in einer Zwischenstellung befindet;
- Fig. 11:: eine Ansicht gemäß der Fig. 10, wobei sich nunmehr jedoch das zweite Sperrelement in einer Sperrstellung befindet;
- Fig. 12:: einen Querschnitt durch die Komponenten gemäß den Fig. 7 bis 11;
- Fig. 13:: in isolierter Darstellung das Betätigungselement der Brennkraftmaschine in einer perspektivischen Ansicht;
- Fig. 14:: einen teilweisen perspektivischen Querschnitt durch Komponenten einer Brennkraftmaschine mit einer erfindungsgemäßen Schaltvorrichtung in einer zweiten Ausführungsform;
- Fig. 15:: den Kurbeltrieb der Brennkraftmaschine gemäß der Fig. 14 in einer Seitenansicht;
- Fig. 16:: den in der Fig. 15 mit XVI gekennzeichneten Ausschnitt in vergrößerter und teilweise geschnittener Darstellung;
- Fig. 17:: in isolierter Darstellung Teile der Schaltvorrichtung und daran angrenzende Komponenten der Brennkraftmaschine gemäß der Fig. 14 in einer perspektivischen Ansicht; und
- Fig. 18:: die Komponenten gemäß der Fig. 17 in einer weiteren perspektivischen Ansicht.

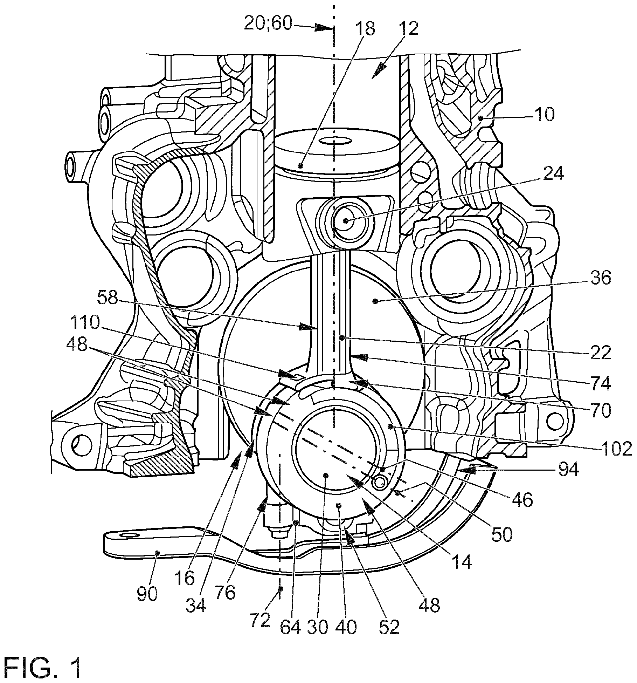

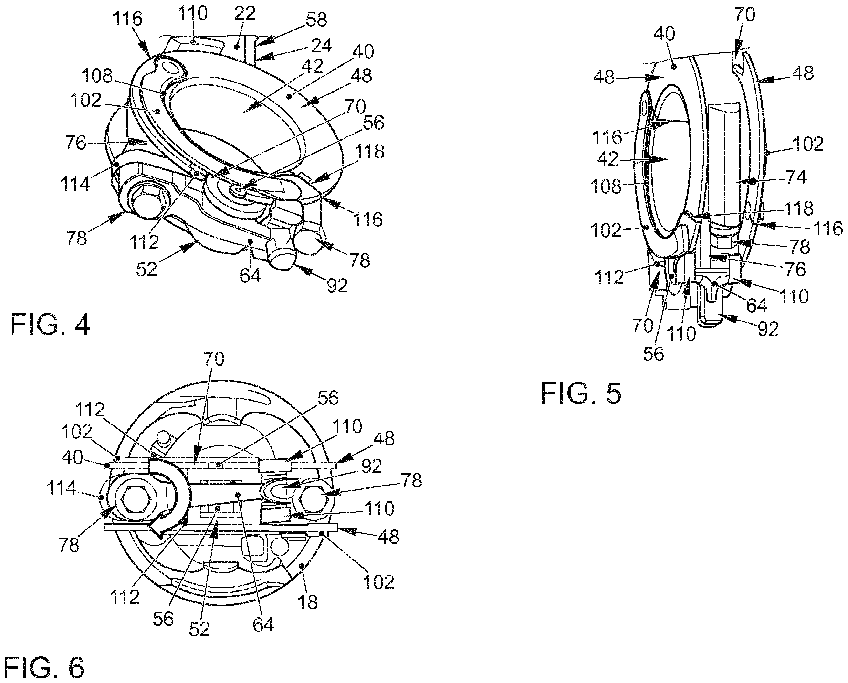

Die Fig. 1 bis 13 zeigen eine Brennkraftmaschine, die beispielsweise ein Otto- oder Dieselmotor ist, mit einer erfindungsgemäßen Schaltvorrichtung in einer ersten Ausführungsform. Die Brennkraftmaschine umfasst gemäß der Fig. 1 ein Zylinderkurbelgehäuse 10, innerhalb dessen ein oder mehrere Zylinder 12 ausgebildet sind. An dem in der Fig. 1 oberen Ende des Zylinderkurbelgehäuses 10 schließt sich an dieses ein nicht dargestellter Zylinderkopf an, während das untere Ende des Zylinderkurbelgehäuses 10 zur Verbindung mit einer ebenfalls nicht dargestellten Ölwanne vorgesehen ist. Ein eine Kurbelwelle 14 der Brennkraftmaschine aufnehmender Kurbelwellenraum 16 wäre dann im Wesentlichen vollumfänglich geschlossen ausgebildet.

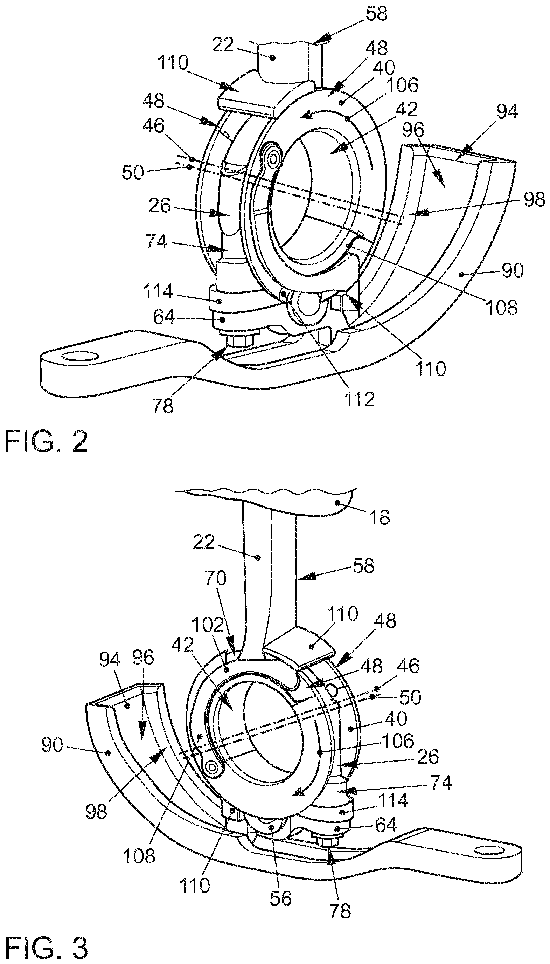

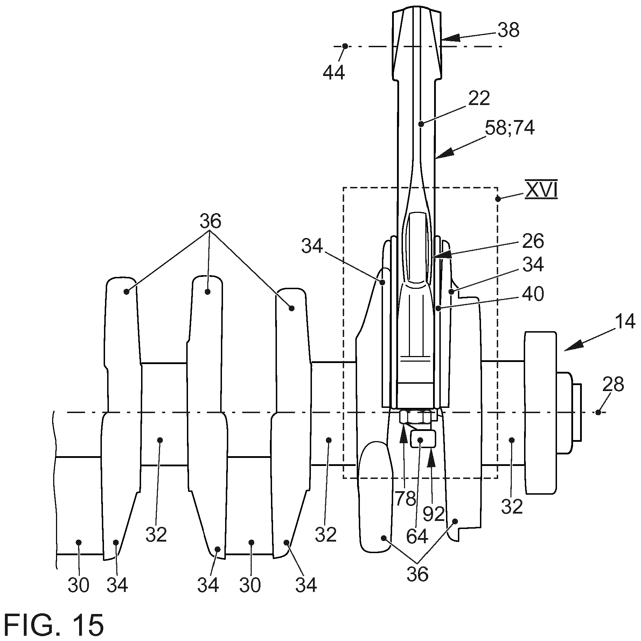

Innerhalb des (beziehungsweise jedes) Zylinders 12 ist ein Kolben 18 axial (bezüglich einer Längsachse 20 des Zylinders 12 und des Kolbens 18) beweglich gelagert. Eine Oberseite des Kolbens 18, der sogenannte Kolbenboden, begrenzt mit dem Zylinderkopf einen Brennraum, in dem während eines Arbeitstaktes im Betrieb der Brennkraftmaschine ein Kraftstoff-Frischgas-Gemisch verbrannt wird, um Arbeit zu verrichten. Eine infolge der Verbrennung erfolgende Druckerhöhung innerhalb des Brennraums führt in bekannter Weise zu einer nach unten gerichteten Bewegung des Kolbens 18, die mittels eines Pleuels 22 in eine Drehbewegung der drehbar innerhalb des Zylinderkurbelgehäuses 10 gelagerten Kurbelwelle 14 übersetzt wird. Hierzu ist das obere Ende des Pleuels 22 schwenkbar an dem Kolben 18 gelagert, wozu der Pleuel 22 ein erstes, sogenanntes kleines Pleuelauge 38 (vgl. Fig. 15) ausbildet, das einen Kolbenbolzen 24 des Kolbens 18 drehbar aufnimmt. Weiterhin ist das untere Ende des Pleuels 22 mit einem dort ebenfalls ausgebildeten, sogenannten großen Pleuelauge 26 (vgl. beispielsweise Fig. 2) drehbar an einem dezentral bezüglich einer Rotationsachse 28 der Kurbelwelle 14 angeordneten Kurbelzapfen 30 gelagert (vgl. insbesondere Fig. 15), so dass die auf den Kolbenboden wirkenden Druckkräfte, die über den Pleuel 22 auf den Kurbelzapfen 30 übertragen werden, ein Drehmoment um die Rotationsachse 28 der Kurbelwelle 14 erzeugen.

Wie sich dies insbesondere aus der Fig. 15 ergibt, umfasst eine solche Kurbelwelle 14 zylindrische Lagerabschnitte 32, die bezüglich der Rotationsachse 28 der Kurbelwelle 14 koaxial angeordnet sind und zum einen der Verbindung benachbarter Kurbelzapfen 30 (bei einer mehrzylindrigen Brennkraftmaschine) miteinander und zum anderen zumindest teilweise der drehbaren Lagerung der Kurbelwelle 14 innerhalb des Zylinderkurbelgehäuses 10 dienen. Die innerhalb der großen Pleuelaugen 26 der Pleuel 22 drehbar gelagerten Kurbelzapfen 30 sind beidseitig von scheibenförmigen Abschnitten der Kurbelwelle begrenzt, die zum einen die sogenannten Kurbelwangen 34 ausbilden, die die Kurbelzapfen 30 mit den Lagerabschnitten 32 verbinden, und die zum anderen den Kurbelwangen 34 bezüglich der Rotationsachse 28 radial gegenüber liegende Ausgleichsmassen 36 ausbilden, wodurch freie Massenkräfte und Massenmomente bei der Rotation der Kurbelwelle 14 möglichst vermieden werden sollen.

Um das Verdichtungsverhältnis im Betrieb der Brennkraftmaschine, d.h. das Verhältnis des Volumens des Brennraums im unteren Totpunkt des Kolbens 18 zu dem Volumen im oberen Totpunkt des Kolbens 18, in zwei Stufen verändern zu können, ist vorgesehen, den/die Kurbelzapfen 30 unter Zwischenschaltung (jeweils) einer Exzenterhülse 40 innerhalb des/der großen Pleuelauges/Pleuelaugen 26 zu lagern. Die (jede) Exzenterhülse 40 umfasst einen rohrförmigen Lagerungsabschnitt 42, dessen zylindrische Innenfläche als Gleitfläche für die Drehlagerung des darin aufgenommenen Kurbelzapfens 30 und dessen zylindrische Außenfläche als Gleitfläche für die Drehlagerung der Exzenterhülse 40 innerhalb des großen Pleuelauges 26 des dazugehörigen Pleuels 22 dient. Die Innen- und die Außenfläche des Lagerungsabschnitts 42 sind dabei nicht koaxial sondern radial um eine definierte Distanz zueinander versetzt, wodurch sich der Abstand zwischen der Schwenk- beziehungsweise Rotationsachse 44 des kleinen Pleuelauges zu der Rotationsachse 46 der zylindrischen Innenfläche der Exzenterhülse 40 und damit der Abstand zwischen dem Kolben 18 und dem dazugehörigen Kurbelzapfen 30 in Abhängigkeit von der Drehausrichtung der Exzenterhülse 40 innerhalb des großen Pleuelauges 26 ändert.

An den beiden längsaxialen Enden geht der rohrförmige Lagerungsabschnitt 42 der Exzenterhülse 40 in jeweils einen Begrenzungsabschnitt 48 über, der jeweils von einer Ringscheibe ausgebildet wird, die sich ausgehend von dem Lagerungsabschnitt 42 radial nach außen erstreckt und dadurch eine Beweglichkeit der Exzenterhülse 40 innerhalb des großen Pleuelauges 26 in axialer Richtung bezüglich der Längsachse 50 des großen Pleuelauges 26 begrenzt.

Mittels einer Sperrvorrichtung 52 (als Teil einer erfindungsgemäßen Schaltvorrichtung) ist die Drehbarkeit der Exzenterhülse 40 (erstes Element beziehungsweise Abtriebselement der erfindungsgemäßen Schaltvorrichtung) innerhalb des großen Pleuelauges 26 des Pleuels 22 (zweites Element der erfindungsgemäßen Schaltvorrichtung) in zwei definierten Drehausrichtungen sperrbar, wobei in dem vorliegenden Ausführungsbeispiel vorgesehen ist, dass die beiden Drehausrichtungen dem kleinsten sowie dem größten Abstand zwischen dem Kolben 18 und dem dazugehörigen Kurbelzapfen 30 entsprechen.

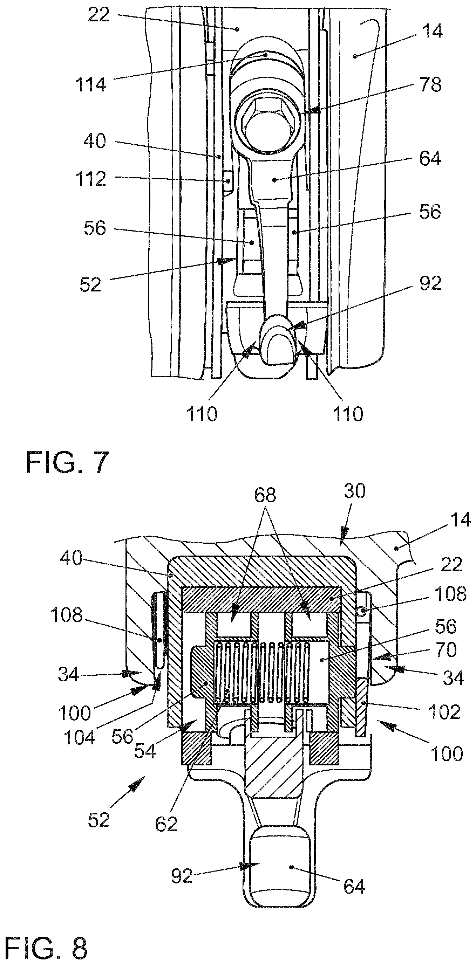

Wie sich insbesondere aus den Fig. 8 bis 11 ergibt, umfasst die Sperrvorrichtung 52 zwei zueinander koaxial ausgerichtete, innerhalb einer zylindrischen Aufnahmeöffnung 54 des Pleuels 22 verschiebbar angeordnete Sperrelemente 56. Dabei ist die Aufnahmeöffnung 54 an dem äußersten (das große Pleuelauge 26 ausbildenden) Ende des Pleuels 22 angeordnet und somit in Verlängerung eines Pleuelschafts 58 des Pleuels 22 positioniert. Insbesondere kann dabei vorgesehen sein, dass die Längsachse 60 des Pleuels 22 die Aufnahmeöffnung 54 durchläuft und insbesondere auch die Längsachse der Aufnahmeöffnung 54 kreuzt. Zwischen den zwei Sperrelementen 56 ist ein vorgespanntes Federelement 62 in Form einer zylindrischen Schraubenfeder angeordnet, das die beiden Sperrelemente 56 voneinander weg und somit jeweils in Richtung des dazugehörigen Endes der Aufnahmeöffnung 54 beziehungsweise in Richtung des daran angrenzenden Begrenzungsabschnitts 48 der Exzenterhülse 40 beaufschlagt.

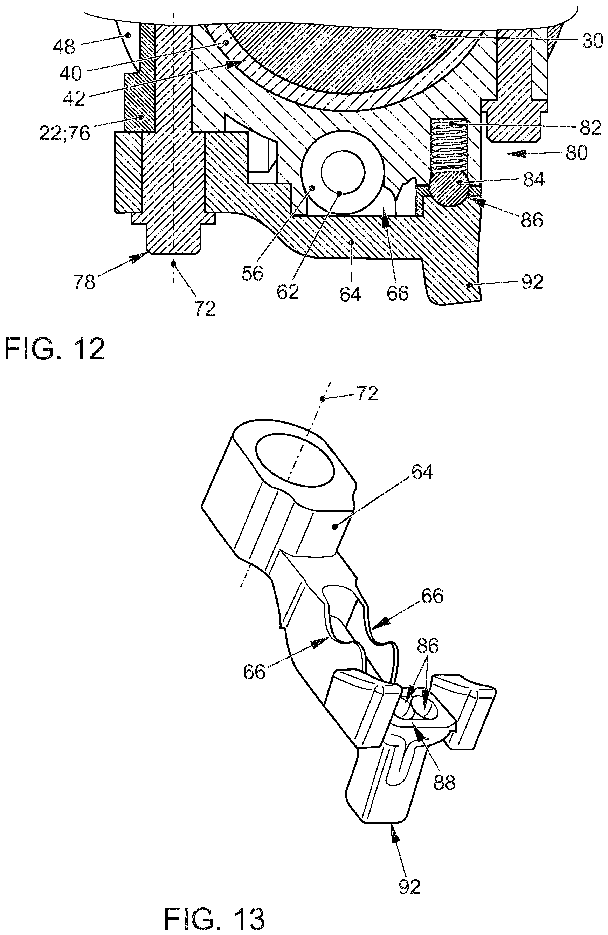

Die axiale Beweglichkeit der Sperrelemente 56 innerhalb der Aufnahmeöffnung 54 ist in Abhängigkeit von der Stellung eines Betätigungselements 64 der erfindungsgemäßen Schaltvorrichtung variabel begrenzt. Dazu greift jeweils ein Mitnahmevorsprung 66 des in der Fig. 13 isoliert dargestellten Betätigungselements 64 in eine (bezüglich der Längsachse der Aufnahmeöffnung 54 beziehungsweise der Bewegungsachse der Sperrelemente 56) umlaufende Mitnahmenut 68 der Sperrelemente 56 ein, wodurch zum einen eine Beweglichkeit der Sperrelemente 56 innerhalb der Aufnahmeöffnung 54 begrenzt und diese zum anderen für eine Veränderung des Verdichtungsverhältnisses, in dem die Brennkraftmaschine betrieben werden kann, durch ein Umschalten des Betätigungselements 64 zwischen zwei möglichen Betätigungsendstellungen des Betätigungselements 64 innerhalb der Aufnahmeöffnung 54 verschoben werden können.

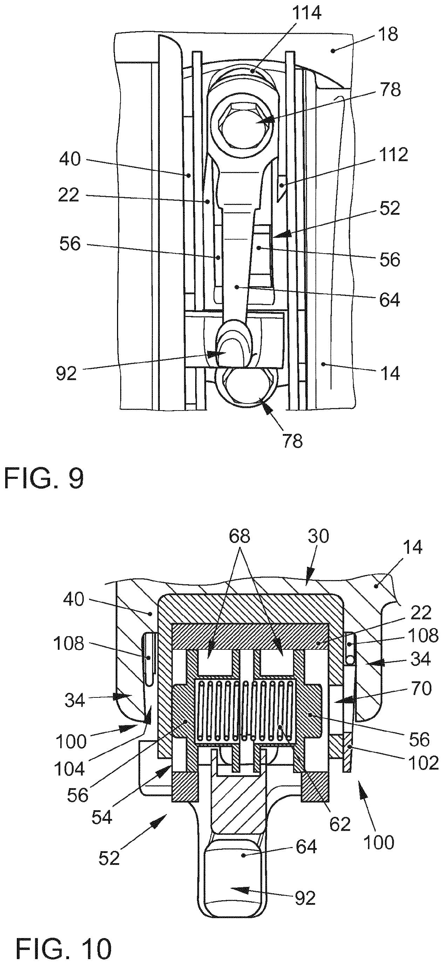

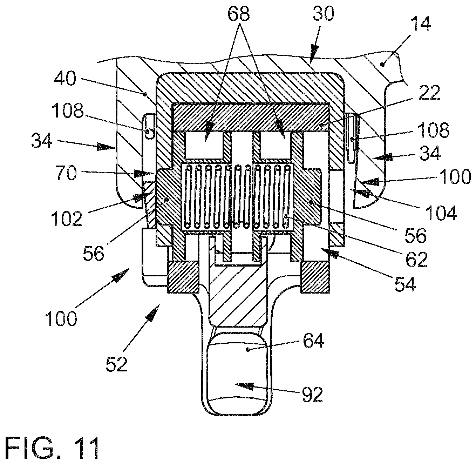

Die Fig. 7 und 8 zeigen dabei das Betätigungselement 64 in einer ersten Betätigungsendstellung, in der zudem ein erstes der Sperrelemente 56, das in den Fig. 8, 10 und 11 rechts dargestellt ist, in eine als Durchgangsöffnung (entsprechend der Ausgestaltung gemäß den Fig. 7 bis 11) oder randseitige Ausnehmung (entsprechend der Ausgestaltung gemäß den Fig. 1 bis 6) in dem dazugehörigen Begrenzungsabschnitt 48 der Exzenterhülse 40 ausgebildete Sperrvertiefung 70 eingreifen kann, sofern die Exzenterhülse 40 sich in der entsprechenden Drehausrichtung bezüglich des Pleuels 22 beziehungsweise des großen Pleuelauges 26 befindet. Die Fig. 9 und 11 zeigen dagegen das Betätigungselement 64 in der zweiten Betätigungsendstellung, in der das zweite der Sperrelemente 56, dass in der Fig. 8, 10 und 11 links dargestellt ist, in eine ebensolche in dem dazugehörigen Begrenzungsabschnitt 48 der Exzenterhülse 40 ausgebildete Sperrvertiefung 70 eingreifen kann, wenn die Exzenterhülse 40 sich in der dazugehörigen Drehausrichtung, die bezüglich der erstgenannten Drehausrichtung der Exzenterhülse 40 (gemäß den Fig. 8 und 10) um ca. 180° versetzt ist, befindet. In diesen zwei Drehausrichtungen der Exzenterhülse 40, die mittels der Sperrvorrichtung 52 sperrbar sind, unterscheiden sich die Abstände zwischen dem Kolben 18 und dem dazugehörigen Kurbelzapfen 30 infolge der exzentrischen Ausbildung der Exzenterhülse 40. Diese unterschiedlichen Abstände werden auch aus einem Vergleich der Fig. 8 und 11 ersichtlich, aus denen die unterschiedlichen Wandstärken des rohrförmigen Lagerungsabschnitt 42 der Exzenterhülse 40 in dem Abschnitt zwischen dem Kurbelzapfen 30 und dem die Sperrvorrichtung 52 aufnehmenden Abschnitt des Pleuels 22 ersichtlich sind. In der Drehausrichtung gemäß der Fig. 8 ist die Wandstärke des entsprechenden Bereichs des Lagerungsabschnitt 42 der Exzenterhülse 40 größer als in der Drehausrichtung gemäß der Fig. 11, wodurch der Abstand zwischen dem Kurbelzapfen 30 und dem Kolben 22 in der Drehausrichtung gemäß der Fig. 8 kleiner als derjenige in der Drehausrichtung gemäß der Fig. 11 ist.

Die Fig. 10 zeigt die Stellungen der Sperrelemente 56 nach einem Umschalten des Betätigungselements 64 von der u.a. in der Fig. 7 dargestellten ersten Betätigungsendstellung in die u.a. in der Fig. 9 dargestellte zweiten Betätigungsendstellung, jedoch noch bevor die Exzenterhülse 40 von der Drehausrichtung gemäß der Fig. 8 in die Drehausrichtung gemäß der Fig. 11 gedreht worden ist. In der Fig. 10 ist gezeigt, dass sich das erste, rechts dargestellte Sperrelement 56 in einer Lösestellung befindet, in der dieses außer Eingriff mit der dazugehörigen Sperrvertiefung 70 der Exzenterhülse 40 und zudem in einem definierten Abstand bezüglich des dazugehörigen Begrenzungsabschnitts 48 der Exzenterhülse 40 angeordnet ist. Ein Bewegen des ersten, rechts dargestellten Sperrelements 56 ausgehend von der Sperrstellung gemäß der Fig. 8 in die Lösestellung gemäß der Fig. 10 wird durch ein Umschalten des Betätigungselements 64 ausgehend von der ersten Betätigungsendstellung gemäß der Fig. 7 in die zweite Betätigungsendstellung gemäß der Fig. 9 erreicht, wobei dieses um eine Schwenkachse 72 geschwenkt wird. Dabei nimmt der entsprechende Mitnahmevorsprung 66 des Betätigungselements 64 infolge eines Kontakts mit der entsprechenden innen liegenden Begrenzungswand der Mitnahmenut 68 das erste Sperrelement 56 mit und verschiebt dieses innerhalb der Aufnahmeöffnung 64 in Richtung ihrer längsaxialen Mitte. Gleichzeitig wird dem zweiten, links dargestellten Sperrelement 56 die Möglichkeit gegeben, sich weiter in Richtung des entsprechenden Endes der Aufnahmeöffnung 64 zu bewegen, wobei diese Bewegung durch die Vorspannung des zwischen den Sperrelementen 56 abgestützten und durch die Bewegung des ersten Sperrelements 56 in Richtung der längsaxialen Mitte der Aufnahmeöffnung 64 weiter vorgespannten Federelements 62 bewirkt wird. Solange die Exzenterhülse 40 noch nicht in die in der Fig. 11 dargestellte zweite Drehausrichtung gedreht worden ist, wird diese Beweglichkeit des zweiten Sperrelements 56 infolge eines Kontakts mit der Innenseite des dazugehörigen Begrenzungsabschnitts 48 der Exzenterhülse 40 begrenzt. Erst kurz vor dem Erreichen der zweiten Drehausrichtung kann das zweite Sperrelement 56 in die dann entsprechend positionierte dazugehörige Sperrvertiefung 70 eingreifen und somit in seine in der Fig. 11 dargestellte Sperrstellung bewegt werden.

Bei einem erneuten Umschalten des Betätigungselements 64, dann von der u.a. in der Fig. 9 dargestellten zweiten Betätigungsendstellung in die u.a. in der Fig. 7 dargestellte erste Betätigungsendstellung, wird in entsprechend umgekehrter Reihenfolge das zweite Sperrelement 56 in die dazugehörige Lösestellung bewegt und das erste Sperrelement 56 freigegeben, wodurch dieses wiederum in die dazugehörige Sperrvertiefung 70 eingreifen kann, sobald die Exzenterhülse 40 erneut um ca. 180° innerhalb des großen Pleuelauges 26 gedreht worden ist.

Der Pleuel 22 umfasst zwei miteinander verschraubte Teile, einen das kleine Pleuelauge 38, den Pleuelschaft 58 sowie eine Hälfte des großen Pleuelauges 26 ausbildenden Pleuelgrundkörper 74 sowie einen die zweite Hälfte des großen Pleuelauges 26 ausbildenden und die Sperrvorrichtung 52 integrierenden Pleueldeckel 76. Diese Zweiteiligkeit des Pleuels 22 im Bereich des großen Pleuelauges 26 ermöglicht die Verbindung des Pleuels 22 mit dem entsprechenden Lagerzapfen 30 der einteiligen Kurbelwelle 14 im Rahmen der Montage der Brennkraftmaschine. Die Trennebene zwischen dem Pleuelgrundkörper 74 und dem Pleueldeckel 76 verläuft senkrecht bezüglich der Längsachse 60 des Pleuels 22 (beziehungsweise des Pleuelschafts 58). Weiterhin verläuft auch die Rotationsachse 50 der Exzenterhülse 40 innerhalb des großen Pleuelauges 26 innerhalb dieser Trennebene, wodurch sich eine radiale Ausrichtung dieser Trennebene bezüglich des großen Pleuelauges 26 ergibt. Wie es insbesondere in der Fig. 12 ersichtlich ist, wird die Schraube einer der Verschraubungen 78 zwischen dem Pleuelgrundkörper 74 und dem Pleueldeckel 76 als Schwenkbolzen für das Betätigungselement 64 genutzt. Die Schwenkachse 72, um die das Betätigungselement 64 schwenkbar ist, um zwischen dessen beiden Betätigungsendstellungen hin und her bewegt zu werden, entspricht somit der Längsachse der Schraube dieser Verschraubung 78.

Eine Sicherung des Betätigungselements 64 in seinen beiden Betätigungsendstellungen erfolgt mittels einer Rastsicherung 80, die gemäß den Fig. 12 und 13 von einer von einem Federelement 82 belastet in einer Führungsöffnung des Pleuels 22 beziehungsweise des Pleueldeckels 76 beweglich geführte Rastkugel 84 in Verbindung mit einer von zwei nebeneinander angeordneten schalenförmigen Rastvertiefungen 86, die in den angrenzenden Abschnitt des Betätigungselements 64 integriert sind, ausgebildet wird. Beim Umschalten des Betätigungselements 64 zwischen seinen Betätigungsendstellungen muss jeweils die Rastkugel 84 unter weiterer Vorspannung des dazugehörigen Federelements 82 angehoben werden, um den zwischen den beiden Rastvertiefungen 86 angeordneten Steg 88 zu überwinden. Dazu ist ein Umschaltmoment (um die Schwenkachse 72 des Betätigungselements 64) erforderlich, das durch üblicherweise im Betrieb der Brennkraftmaschine auftretende Kräfte nicht hervorgerufen wird. Ein ungewolltes, selbsttätiges Umschalten des Betätigungselements 64 kann somit durch die Rastsicherung 80 vermieden werden. Andererseits ist für ein Umschalten lediglich die Aufbringung eines entsprechenden Umschaltmoments auf das Betätigungselement 64 erforderlich, ohne dass eine formschlüssig wirkende Sperre gelöst werden müsste.

Eine Betätigung des Betätigungselements 64 erfolgt mittels einer schwenkbar an dem Zylinderkurbelgehäuse 10 befestigten Betätigungsschiene 90, wie dies in den Fig. 1 bis 3 dargestellt ist. Dabei ist die Betätigungsschiene 90 in der Fig. 1 in der Art einer Explosionsdarstellung beabstandet von der Verbindungsstelle an dem Zylinderkurbelgehäuse 10 und somit von seiner eigentlichen Funktionsstellung innerhalb des Kurbelwellenraums 16 dargestellt. In seiner tatsächlichen Funktionsstellung (vgl. Fig. 2 und 3) befindet sich die Betätigungsschiene 90 so nah an der Rotationsachse 28 der Kurbelwelle 14, dass das mit dem Pleuel 22 verbundene Betätigungselement 64 mit einem von diesem ausgebildeten Führungselement 92 in der dem unteren Totpunkt des Kolbens 18 entsprechenden Stellung und zumindest über einen definierten Winkelbereich vor dem Erreichen dieser Stellung innerhalb einer von zwei Seitenwänden der Betätigungsschiene ausgebildeten Führungsnut 94 angeordnet ist. Die Breite der Führungsnut 94 nimmt dabei ausgehend von einem Einlauf, d.h. demjenigen Ende, an dem das Führungselement 92 des Betätigungselements 64 in die Führungsnut 94 im Rahmen jeder Umdrehung der Kurbelwelle 14 eintritt, kontinuierlich ab. Zudem ist die Längserstreckung der Betätigungsschiene 90 an die Umlaufbahn des Führungselements 92 des Betätigungselements 64, die dieses infolge einer Umdrehung der Kurbelwelle 14 beschreibt, mittels eines gekrümmten Verlaufs angepasst, so dass insbesondere vorgesehen sein kann, dass ein Abstand, den die Unterseite des Führungselements 92 zu dem Nutgrund 96 der Führungsnut 94 der Betätigungsschiene 90 einhält, über den Verlauf der Bewegung des Führungselements 92 innerhalb der Führungsnut 94 im Wesentlichen gleich bleibt. Dabei ist vorzugsweise zu dem vorgesehen, dass das Führungselement 92 des Betätigungselements 64 den Nutgrund 96 der Führungsnut 94 zu keiner Zeit kontaktiert.

Befindet sich das Betätigungselement 64 in einer seiner Betätigungsendstellungen und die Betätigungsschiene 90 in der dazugehörigen Funktionsstellung, wird das Führungselement 92 des Betätigungselements 64 bei jeder Umdrehung der Kurbelwelle 14 ohne Kontakt mit einer der von den Seitenwänden der Betätigungsschiene 90 ausgebildeten innenseitigen Führungsflächen 98 der Betätigungsschiene 90 durch die Führungsnut 94 hindurch geführt. Insbesondere kann vorgesehen sein, dass das Führungselement 92 zumindest am Ende der Führungsnut 94 im Wesentlichen exakt mittig zwischen den zwei Seitenwänden geführt ist. Wird dagegen ausgehend von einer solchen Ausgangsstellung die Betätigungsschiene 90 mittels eines nicht dargestellten, von einer ebenfalls nicht dargestellten Motorsteuerung der Brennkraftmaschine angesteuerten Aktors in die entsprechende andere Funktionsstellung geschwenkt, so kontaktiert das Führungselement 92 des Betätigungselements 64 beim nächsten Eintreten in die Führungsnut 94 die durch das Betätigen der Betätigungsschiene 90 in die Umlaufbahn des Führungselements 92 gerückte Führungsfläche 98, so dass das Führungselement 92 entlang dieser Führungsfläche 98 geführt und dabei das Betätigungselement 64 infolge der schmaler werdenden Führungsnut 94 in Richtung seiner anderen Betätigungsendstellung bewegt beziehungsweise geschwenkt wird. Dabei ist die durch den Kontakt mit der entsprechenden Führungsfläche 98 bewirkte Schwenkbewegung des Betätigungselements 64 lediglich so groß, dass die Rastkugel 84 der Rastsicherung 80 über den zwischen den beiden Rastvertiefungen 86 ausgebildeten Steg 88 bewegt wird. Der letzte, relativ kleine Abschnitt der Schwenkbewegung des Betätigungselements 64 in seine dann vorgesehene Betätigungsendstellung wird durch das Einrasten der Rastkugel 84 in die entsprechende Rastvertiefung 88 erreicht. Dadurch kann bewirkt werden, dass sich das Führungselement 92 des Betätigungselements 64 noch ein Stück weit von der die Umschaltung bewirkenden Führungsfläche 98 der Betätigungsschiene 90 entfernt und somit in dem anschließenden Betrieb der Brennkraftmaschine kein Kontakt zu dieser beziehungsweise beiden Seitenwänden der Betätigungsschiene 90 gegeben ist, wodurch die Reibungsverluste und ein erhöhter Geräuschpegel im Betrieb der Brennkraftmaschine vermieden werden können.

Die Führungsflächen 98 der Betätigungsschiene 920 sind derart gekrümmt ausgebildet, dass das Führungselement 92 des Betätigungselements 64 nach einem Umschalten der Betätigungsschiene 90 in tangentialer Richtung auf die entsprechende Führungsfläche 98 aufläuft, wodurch ein Umschalten des Betätigungselements 64 mit einem möglichst gleichmäßig ansteigenden Kraftverlauf erreicht werden kann. Dies kann sich vorteilhaft auf die Lebensdauer der beteiligten Komponenten sowie auf das akustische Verhalten der Brennkraftmaschine auswirken.

Um ein sicheres und schnelles Verdrehen der Exzenterhülse 40 zwischen den beiden durch die Sperrvorrichtung 52 sperrbaren Drehausrichtungen zu ermöglichen, nachdem das Betätigungselement 64 mittels der Betätigungsschiene 90 von einer der Betätigungsendstellungen in die andere der Betätigungsendstellungen geschwenkt wurde, umfasst die erfindungsgemäße Schaltvorrichtung der Brennkraftmaschine zwei erfindungsgemäße kraftschlüssig wirkende Kupplungsvorrichtungen 100, mittels derer die Exzenterhülse 40 (als gemeinsames Abtriebselement der beiden Kupplungsvorrichtungen 100) temporär an die Kurbelwelle 14 (als gemeinsames Antriebselement der beiden Kupplungsvorrichtungen 100) koppelbar ist, um die Exzenterhülse 40 relativ zu dem Pleuel 22 beziehungsweise dem großen Pleuelauge 26 zu verdrehen. Jede der Kupplungsvorrichtungen 100 umfasst ein sichelförmiges beziehungsweise teilringförmiges Kupplungselement 102, das auf der Außenseite jeweils eines der Begrenzungsabschnitte 48 der Exzenterhülse 40 und damit in einem zwischen der Exzenterhülse 40 und der angrenzenden Kurbelwange 34 der Kurbelwelle 14 ausgebildeten Kupplungsspalts 104 angeordnet ist. Dabei ist ein Endabschnitt des Kupplungselements 102 drehbar in dem dazugehörigen Begrenzungsabschnitt 48 der Exzenterhülse 40 befestigt und das Kupplungselement 102 erstreckt sich ausgehend von dieser Drehlagerung in der Drehrichtung 106 der Exzenterhülse 40, die diese im Betrieb der Brennkraftmaschine (und bei einer Sperrung in einer der Drehausrichtungen) relativ zu den dazugehörigen Kurbelwangen 34 aufweist (vgl. Fig. 2 und 3).

Wie sich beispielsweise aus den Fig. 8, 10 und 11 ergibt, nimmt die Spaltbreite des Kupplungsspalts 104 in radialer Richtung nach außen hin ab, was durch eine entsprechende Schrägstellung der als Kupplungsflächen dienenden (der Exzenterhülse 40 zugewandten) Innenseiten der Kurbelwangen 34 um einen Winkel von ca. 3° gegenüber einer Ausrichtung, die senkrecht zu der Rotationsachse 50 der Exzenterhülse 40 innerhalb des großen Pleuelauges 26 oder auch der Rotationsachse 46 des Kurbelzapfens 30 innerhalb der Exzenterhülse 40 erreicht wird. Der Querschnitt jedes der Kupplungselemente102 ist entsprechend zulaufend beziehungsweise keilförmig ausgebildet, so dass sich eine parallele Ausrichtung der Kupplungsflächen der Kupplungselemente ein zwei zu den jeweils benachbarten, von den Kurbelwangen 34 ausgebildeten benachbarten Kupplungsflächen ergibt. Die Kupplungselemente 102 beider Kupplungsvorrichtungen 100 sind jeweils mittels eines vorgespannten Federelements 108 in Richtung radial nach außen und somit in den schmaler werdenden Kupplungsspalt 104 hinein beaufschlagt. Diese Federbeaufschlagung führt zu Ausgangsbelastungen für die Kupplungsvorrichtungen 100, durch die die Kupplungsflächen der Kupplungselemente 102 an die Kupplungsflächen der Kurbelwangen 34 und der Exzenterhülse 40 (die von den Außenseiten der Begrenzungsabschnitte 48 der Exzenterhülse 40 gebildet werden) gedrückt werden. Die so erzeugten Ausgangsbelastungen führen zu Reibungskräften, die einer Relativbewegung zwischen der Exzenterhülse 40 und den Kurbelwangen 34 entgegengesetzt sind und deren Wirkungsrichtung derart ist, dass diese zusätzlich ein Moment um die jeweilige Drehlagerung der Kupplungselemente 102 in Richtung eines weitergehenden Schwenkens nach außen und somit ein zusätzliches Einziehen in den jeweiligen schmaler werdenden Kupplungsspalt 104 bewirken. Dadurch wird eine Selbstverstärkung der kraftschlüssigen Wirkungen der Kupplungsvorrichtungen 100 in dem jeweiligen geschlossenen Zustand erreicht.

Im Betrieb der Brennkraftmaschine und bei einer Sperrung der Exzenterhülse 40 in einer der Drehausrichtungen sind die Kupplungsvorrichtungen 100 in der Regel geöffnet, indem die Kupplungselemente 102 durch jeweils einen Kontakt mit einem Anschlagelement 110 soweit unter weiterer Vorspannung des jeweiligen Federelements 108 nach innen verschwenkt sind, dass ein möglichst geringer Kraftschluss zwischen zumindest den Kupplungsflächen der Kurbelwangen 34 sowie den dazu benachbarten Kupplungsflächen der Kupplungselemente 102 gegeben ist. Dabei wird jeweils dasjenige Kupplungselement 102, das an demjenigen Begrenzungsabschnitt 48 der Exzenterhülse 40 drehbar gelagert ist, in das infolge der entsprechend gewählten Betätigungsendstellung des Betätigungselements 64 das dazugehörige Sperrelement 56 in die Sperrvertiefung 70 eingreift, mittels eines dazugehörigen Anschlagelements 110 des Betätigungselements 64 radial nach innen ausgelenkt, während ein Auslenken des jeweils anderen Kupplungselements 102 mittels eines passiven Anschlagelements 110 erfolgt.

Wird nun das Betätigungselement 64 umgeschaltet, wird das zuvor von diesem ausgelenkt gehaltene Kupplungselement 102 freigegeben, so dass dieses infolge der Federbelastung nach außen und somit in den dazugehörigen schmaler werdenden Kupplungsspalt104 schwenkt, wodurch zumindest die entsprechende Kupplungsvorrichtung 100 geschlossen wird. Diese geschlossene Kupplungsvorrichtung 100 bewirkt dann zunächst alleine ein Mitdrehen der Exzenterhülse 40 mit den relativ zu dem großen Pleuelauge 26 drehenden Kurbelwangen 34. Dieses Mitdrehen bewirkt ein Lösen des anderen Kupplungselements 102 von dem auslenkenden Kontakt mit dem passiven Anschlagelement 110, so das anschließend auch dieses Kupplungselement 102 infolge der Federbelastung in den schmaler werdenden Kupplungsspalt 104 gedrückt und damit auch diese Kupplungsvorrichtung 100 geschlossen wird. Für den Rest der Drehung der Exzenterhülse 40 um 180° bis in die andere Drehausrichtung bewirken dann beide Kupplungsvorrichtungen 100 die kraftschlüssige Kopplung der Exzenterhülse 40 an die dazugehörigen Kurbelwangen 34 der Kurbelwelle 14. Kurz vor dem Erreichen der neuen Drehausrichtung der Exzenterhülse 40 greift dann das andere Sperrelement 56, wie bereits anhand der Figuren 10 und 11 beschrieben, in die Sperrvertiefung 70 des dazugehörigen Begrenzungsabschnitts 48 der Exzenterhülse 40 ein und die Kupplungselemente 102 beider Kupplungsvorrichtungen 100 laufen dann auf die entsprechenden Anschlagelemente 110, zum einen das infolge der Umschaltung des Betätigungselements 64 ausgerückte zweite Anschlagelement 110 des Betätigungselements 64 und zum anderen wiederum auf das die Exzenterhülse 40 beidseitig überragende passive Anschlagelement 110 auf, wodurch diese wiederum unter erneuter Vorspannung der Federelemente 108 nach innen verschwenkt und damit die Kupplungsvorrichtungen 100 gelöst werden. Die Brennkraftmaschine kann dann mit verändertem Verdichtungsverhältnis weiter betrieben werden, wobei die Exzenterhülse 40 in der neuen Drehausrichtung gegenüber dem Pleuel 22 gesperrt ist und infolge der gelösten Kupplungsvorrichtungen 100 wieder weitgehend reibungsfrei relativ zu den Kurbelwangen 34 drehbar ist.

Infolge der hohen Drehzahlen, mit denen Brennkraftmaschinen, die beispielsweise zum Antrieb von Kraftfahrzeugen vorgesehen sind, betrieben werden, ergeben sich hohe Differenz(winkel)geschwindigkeiten zwischen der temporär mittels der Kupplungsvorrichtungen 100 mit den Kurbelwangen 34 gekoppelten Exzenterhülse 40 und dem die Sperrvorrichtung 52 integrierenden Pleuel 22. Um trotz dieser hohen Differenzgeschwindigkeiten ein sicheres Einrasten des jeweils federbelastet während der Veränderung der Drehausrichtung gegen die Innenseite des dazugehörigen Begrenzungsabschnitts 48 der Exzenterhülse 40 gedrückten Sperrelements 56 zu gewährleisten, weist jede der Sperrvertiefungen 70 bezüglich einer Umlaufbahn des dazugehörigen Sperrelements 56 (bei relativ zu dem Pleuel 22 drehender Exzenterhülse 40) eine größere Abmessung als der für ein Eingreifen in die Sperrvertiefung 70 vorgesehene Teil des Sperrelements 56 auf. Die Sperrvertiefungen 70 sind dazu als bogenförmig verlaufende, längliche Durchgangsöffnungen beziehungsweise Ausnehmungen ausgebildet. Die Sperrelemente 56 können somit nicht nur in einer exakten Drehausrichtung sondern in einem größeren Winkelbereich in die dazugehörigen Sperrvertiefungen 70 eingreifen, so dass dies trotz relativ hoher Differenzgeschwindigkeiten und trotz der Trägheit, mit der die Sperrelemente 56 infolge der Federbelastung in Richtung der dazugehörigen Sperrvertiefungen 70 beschleunigt werden, mit ausreichender Sicherheit erfolgt.

Die größeren Abmessungen der Sperrvertiefungen 70 im Vergleich zu den in diese eingreifenden Teilen der Sperrelemente 56 führt trotz einer Sperrung durch eines der Sperrelemente 56 grundsätzlich zu einer (eingeschränkten) Drehbeweglichkeit zwischen der Exzenterhülse 40 und dem großen Pleuelauge 26. Um diese Beweglichkeit zu eliminieren oder zumindest möglichst weitgehend zu verringern ist jedem Sperrelement 56 noch ein an dem Pleuel 22 und konkret dem Pleueldeckel 76 befestigtes, passives Rücklaufsperrelement 112 zugeordnet, das dann, wenn das dazugehörige Sperrelement 56 an dem bezüglich der Drehrichtung 106 der Exzenterhülse 40 relativ zu den Kurbelwangen 34 vorderen Ende der dazugehörigen Sperrvertiefung 70 eingreift, im Bereich des anderen Endes ebenfalls in diese Sperrvertiefung 70 eingreift und somit gemeinsam mit dem Sperrelement 56 die Exzenterhülse 40 weitgehend drehspielfrei mit dem Pleuel 22 verbindet. Ein Herausbewegen eines in eine Sperrvertiefung 70 eingreifenden Rücklaufsperrelements 112, wenn auch das dazugehörige Sperrelement 56 infolge einer Umschaltung des Betätigungselements 64 aus der dazugehörigen Sperrvertiefung 70 heraus bewegt wurde, wird automatisch dadurch erreicht, dass die Rücklaufsperrelemente 112 derart mit jeweils einer Schrägfläche ausgebildet sind, dass diese bei einem dann bewirkten Mitnehmen der Exzenterhülse 40 durch die Kurbelwelle 14 bei einem Kontakt mit dem Rand der jeweiligen Sperrvertiefung 70 unter weiterer Vorspannung eines dazugehörigen Federelements 114 ausgelenkt werden. Für eine konstruktiv vorteilhafte Integration der beiden Rücklaufsperrelemente 112 in den Pleuel 22 ist vorgesehen, dass diese jeweils an einem freien Ende eines Schenkels des in Form einer U-förmigen Blattfeder ausgebildeten Federelements 114 befestigt sind und das Federelement 114 im Bereich seines bogenförmigen Abschnitts, in dem dieses nicht ausgelenkt wird, an dem Betätigungselement 64 befestigt ist.

So wie der Pleuel 22 im Bereich des großen Pleuelauges 26 ist auch die Exzenterhülse 40 aus zwei Teilen beziehungsweise Halbschalen ausgebildet, wobei die Trennebene 116 zwischen diesen Teilen vorzugsweise derart angeordnet ist, dass die Rotationsachse 46 des Kurbelzapfens 30 innerhalb der Exzenterhülse 40 oder die Rotationsachse 50 der Exzenterhülse 40 innerhalb des großen Pleuelauges 26 innerhalb dieser Trennebene 116 verläuft. Für eine möglichst vorteilhafte Montage der Exzenterhülse 40 ist weiterhin vorgesehen, dass Lageröffnungen (und insbesondere die Längsachsen davon), die den Drehlagerungen der Kupplungselemente 102 in den dazugehörigen Begrenzungsabschnitten 48 der Exzenterhülse 40 dienen, ebenfalls in dieser Trennebene 116 angeordnet sind. Gleiches gilt für radial bezüglich einer der Rotationsachsen 46, 50 der Exzenterhülse 40 ausgerichtete Führungsöffnungen 118 für die auslenkbaren Enden der bogenförmig an den Innenseiten der dazugehörigen Kupplungselemente 102 geführten und im Bereich der Drehlagerungen der Kupplungselemente 102 drehgesichert integrierten Federelemente 108. Ein separates Verbinden der beiden Teile der Exzenterhülse 40 ist nicht erforderlich, weil diese infolge der Anordnung innerhalb des großen Pleuelauges 26 zusammengehalten werden.

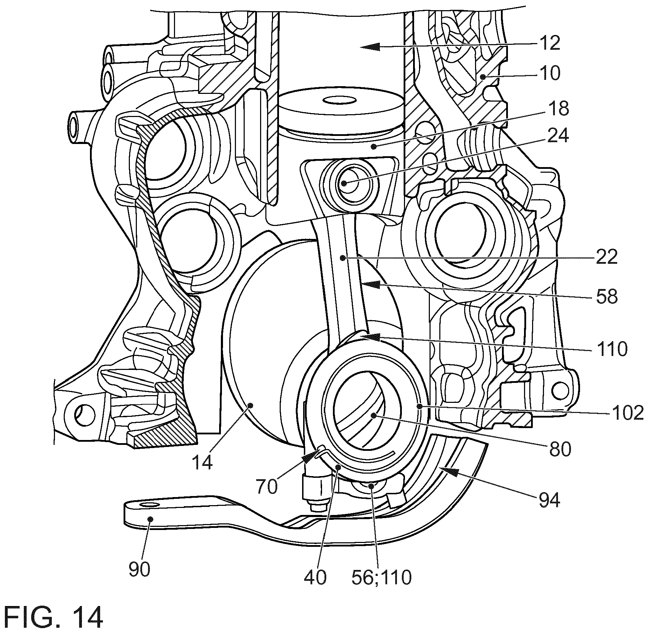

Die in den Fig. 14 bis 17 dargestellte Brennkraftmaschine mit einer erfindungsgemäßen Schaltvorrichtung in einer zweiten Ausführungsform unterscheidet sich von der ersten Ausführungsform gemäß den Fig. 1 bis 13 im Wesentlichen lediglich hinsichtlich der Ausgestaltung der Kupplungsvorrichtungen 100 und der zum Lösen der Kupplungsvorrichtungen 100 aktiv beeinflussbaren Einstellvorrichtung.

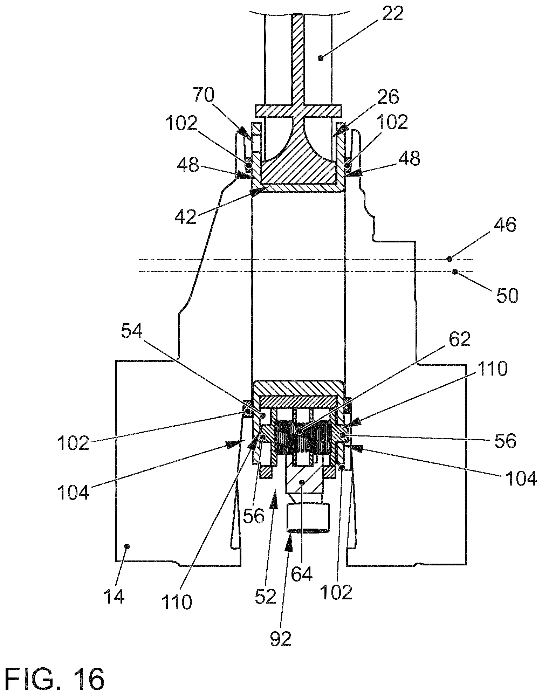

Auch bei dieser Brennkraftmaschine sind zwei kraftschlüssig wirkende Kupplungsvorrichtungen 100 vorgesehen, die jeweils ein Kupplungselement 102 aufweisen, das elastisch in eine die jeweilige Kupplungsvorrichtung 100 schließende und somit die Exzenterhülse 40 an eine Drehbewegung der Kurbelwelle 14 koppelnde Stellung beaufschlagt ist. Während bei der Ausführungsform gemäß den Fig. 1 bis 13 Kupplungselemente 102 vorgesehen sind, die mittels separaten vorgespannten Federelementen 108 beaufschlagt sind, sind die Kupplungselemente 102 bei der Ausführungsform gemäß den Fig. 14 bis 17 selbst elastisch auslenkbar ausgebildet. Konkret sind diese jeweils in Form einer Spiralfeder ausgebildet, deren eines Ende in eine Öffnung in der dazugehörigen Begrenzungswand der Exzenterhülse 40 eingreift und dadurch lagegesichert ist, und die sich ausgehend von diesem Ende um mehr als 360° und konkret um ca. 450° um die von der Exzenterhülse 40 ausgebildete Lagerungsöffnung für den dazugehörigen Kurbelzapfen 30 der Kurbelwelle 14 herumgeführt ist. Das zweite Ende jedes der spiralfederförmigen Kupplungselemente 102 ist abgewinkelt ausgebildet und stützt sich mit diesem abgewinkelten Abschnitt randseitig an dem dazugehörigen Begrenzungsabschnitt 48 der Exzenterhülse 40 ab. Dabei ist die Geometrie der spiralfederförmigen Kupplungselemente 102 derart gewählt, dass diese bei einem Anliegen der abgewinkelten Enden an den Rändern der Begrenzungsabschnitte 48 elastisch aufgeweitet und somit vorgespannt sind, was zu einem Bestreben der Kupplungselemente 102 führt, sich enger beziehungsweise auf einen kleineren Durchmesser zusammenzurollen. Dies führt zu einer konstruktiven elastischen Beaufschlagung der Kupplungselemente 102, weil sich diese dadurch selbsttätig in die bei dieser Ausführungsform der Kupplungsvorrichtungen 100 radial nach innen schmaler werdenden Kupplungsspalte 104 (vgl. Fig. 16) hineinziehen und dadurch eine kraftschlüssige Koppelung der Exzenterhülse 40 an die Kurbelwangen 34 bewirken, sofern diese nicht durch ein Anschlagen an Anschlagelemente 110 radial aufgeweitet und damit der Kraftschluss zwischen den Kupplungselementen 102 und den Kupplungsflächen der Kurbelwangen 34 sowie der Exzenterhülse 40 aufgehoben wird.

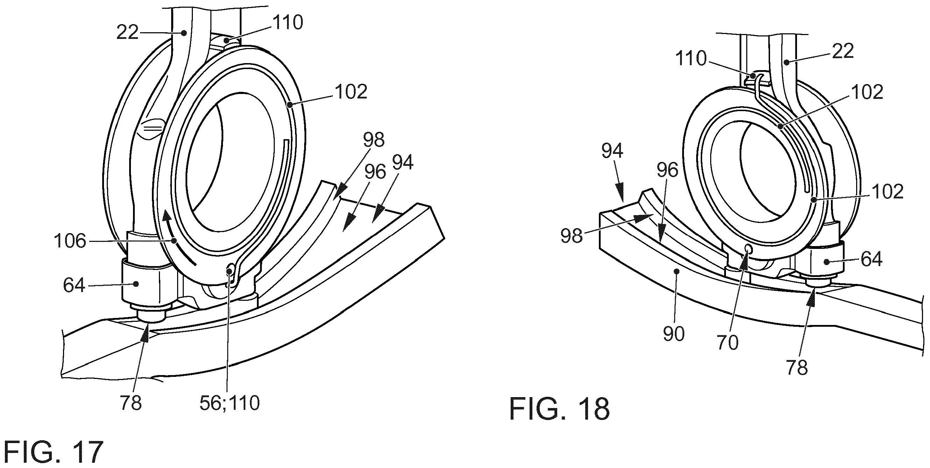

Ein weiterer Unterschied der Brennkraftmaschine gemäß den Fig. 14 bis 18 zu derjenigen gemäß den Fig. 1 bis 13 liegt darin, dass die aktivierbaren und deaktivierbaren Anschlagelemente 110, von denen in jeweils einer der beiden Drehausrichtungen der Exzenterhülse 40, die mittels der Sperrvorrichtung 52 sperrbar sind, eines auf eines der Kupplungselemente 102 wirkt, während gleichzeitig das andere Kupplungselement 102 durch einen Kontakt mit einem passiven Anschlagelement 110 radial aufgeweitet ist (vgl. Fig. 18), nicht von dem Betätigungselement 64 sondern von dem jeweilige Sperrelement 56 ausgebildet werden. Hierzu ist vorgesehen, dass das entsprechende Sperrelement 56, das auch in die dazugehörige Sperrvertiefung 70 der Exzenterhülse 40 eingreift, so weit durch die als Durchgangsöffnung in dem entsprechenden Begrenzungsabschnitt 48 der Exzenterhülse 40 ausgebildete Sperrvertiefung 70 bis in den dazugehörigen Kupplungsspalt 104 hineinragt, dass das bei geschlossenen Kupplungsvorrichtungen 100 und somit bei einem Mitnehmen der Exzenterhülse 40 durch die Kurbelwelle 14 randseitig an dem entsprechenden Begrenzungsabschnitt 48 abgestützte Ende des entsprechenden Kupplungselements 102 beim Erreichen der entsprechenden Drehausrichtung der Exzenterhülse 40 auf den in den Kupplungsspalt 104 ragenden Teil des entsprechenden Sperrelements 56 aufläuft und dadurch radial aufgeweitet wird (vgl. Fig. 17). Gleichzeitig läuft das entsprechende Ende des anderen Kupplungselements 102 außenseitig auf das dazugehörige passive Anschlagelement 110 auf und wird ebenfalls aufgeweitet. Damit sind beide Kupplungsvorrichtungen 100 geöffnet und ein Kraftschluss zwischen den mit der Exzenterhülse 40 formschlüssig verbundenen Kupplungselementen 102 und den Kurbelwangen 34 der Kurbelwelle 14 ist im Wesentlichen unterbrochen.

Wird ausgehend von einer solchen Ausgangsstellung, in der die Brennkraftmaschine mit einem konstanten Verdichtungsverhältnis betrieben wird, das Betätigungselement 64 mittels der Betätigungsschiene 90 entsprechend dem Vorgehen bei der Brennkraftmaschine gemäß den Fig. 1 bis 13 umgeschaltet, wird wiederum zunächst das in einer Verriegelungsstellung befindliche Sperrelement 56 in eine Lösestellung bewegt. Das durch dieses Sperrelement 56 dann nicht mehr aufgeweitete Kupplungselement 102 bewirkt dann zunächst alleine ein Mitnehmen der Exzenterhülse 40 durch die Kurbelwelle 14, wodurch in einem ersten, relativ kleinen Abschnitt der Drehung der Exzenterhülse 40 relativ zu dem großen Pleuelauge 26 auch das zweite Kupplungselement 102 außer Eingriff mit dem passiven Anschlagelement 110 gebracht wird. Dieses zweite Kupplungselement 102 koppelt dann ebenfalls die Exzenterhülse 40 kraftschlüssig an die dazugehörige Kurbelwange 34 der Kurbelwelle 14. Das beim Erreichen der anderen Drehausrichtung der Exzenterhülse 40 dann in die dazugehörige Sperrvertiefung 70 eingreifende zweite Sperrelemente 56 weitet dann das dazugehörige Kupplungselement 102 auf, während das andere Kupplungselement 102 durch das dazugehörige passive Anschlagelement 110 aufgeweitet wird, so dass dann wiederum beide Kupplungsvorrichtungen 100 geöffnet sind.

### Bezugszeichenliste

- 10: Zylinderkurbelgehäuse
- 12: Zylinder
- 14: Kurbelwelle / Antriebselement
- 16: Kurbelwellenraum
- 18: Kolben
- 20: Längsachse des Zylinders/Kolbens
- 22: Pleuel / zweites Element
- 24: Kolbenbolzen
- 26: großes Pleuelauge
- 28: Rotationsachse der Kurbelwelle
- 30: Kurbelzapfen
- 32: Lagerabschnitt der Kurbelwelle
- 34: Kurbelwangen
- 36: Ausgleichsmasse der Kurbelwelle
- 38: kleines Pleuelauge
- 40: Exzenterhülse / Abtriebselement / erstes Element
- 42: Lagerungsabschnitt der Exzenterhülse
- 44: Rotationsachse des kleinen Pleuelauges
- 46: Rotationsachse der zylindrischen Innenfläche der Exzenterhülse
- 48: Begrenzungsabschnitt der Exzenterhülse
- 50: Längsachse des großen Pleuelauges / Rotationsachse der zylindrischen Außenfläche der Exzenterhülse
- 52: Sperrvorrichtung
- 54: Aufnahmeöffnung des Pleuels
- 56: Sperrelement
- 58: Pleuelschaft
- 60: Längsachse des Pleuels
- 62: Federelement der Sperrvorrichtung
- 64: Betätigungselement
- 66: Mitnahmevorsprung des Betätigungselements
- 68: Mitnahmenut des Sperrelements
- 70: Sperrvertiefung
- 72: Schwenkachse des Betätigungselements
- 74: Pleuelgrundkörper
- 76: Pleueldeckel
- 78: Verschraubung zwischen dem Pleuelgrundkörper und dem Pleueldeckel
- 80: Rastsicherung
- 82: Federelement der Rastsicherung
- 84: Rastkugel der Rastsicherung
- 86: Rastvertiefung der Rastsicherung
- 88: Steg der Rastsicherung
- 90: Betätigungsschiene
- 92: Führungselement des Betätigungselements
- 94: Führungsnut der Betätigungsschiene
- 96: Nutgrund der Führungsnut
- 98: Führungsflächen der Führungsnut
- 100: Kupplungsvorrichtung
- 102: Kupplungselement
- 104: Kupplungsspalt
- 106: Drehrichtung der Exzenterhülse relativ zu den Kurbelwangen
- 108: Federelement der Kupplungsvorrichtung
- 110: Anschlagelement
- 112: Rücklaufsperrelement
- 114: Federelement für das Rücklaufsperrelement
- 116: Trennebene zwischen den Teilen der Exzenterhülse
- 118: Führungsöffnung für das Federelement der Kupplungsvorrichtung

## Patentansprüche

1. Kupplungsvorrichtung (100) zur bedarfsweisen Übertragung eines Drehmoments zwischen einem um eine Rotationsachse (28) drehbaren Antriebselement (14) und einem um eine Rotationsachse (50) drehbaren Abtriebselement (40), wozu diese kraftschlüssig mittels eines Kupplungselements (102) koppelbar sind, wobei das Antriebselement (14) und das Abtriebselement (40) jeweils eine Kupplungsfläche ausbilden, **dadurch gekennzeichnet, dass** die Kupplungsflächen einen Kupplungsspalt (104) mit in einer bezüglich zumindest einer der Rotationsachsen (28, 50) radialen Richtung abnehmender Spaltbreite ausbilden, wobei das Kupplungselement (102) in eine erste Stellung und eine zweite Stellung bringbar ist, die sich hinsichtlich der radialen Position innerhalb des Kupplungsspalts (104) und damit hinsichtlich des Anpressdrucks zwischen dem Kupplungselement (102) und den Kupplungsflächen unterscheiden.

2. Kupplungsvorrichtung (100) gemäß Anspruch 1, **gekennzeichnet durch** Mittel zur elastischen Beaufschlagung des Kupplungselements (102).

3. Kupplungsvorrichtung (100) gemäß Anspruch 1 oder 2, **dadurch gekennzeichnet, dass** diese selbstverstärkend ausgebildet ist.

4. Kupplungsvorrichtung (100) gemäß einem der vorhergehenden Ansprüche, **dadurch gekennzeichnet, dass** das Kupplungselement (102) die erste Stellung im elastisch nicht-beaufschlagten Zustand oder infolge einer konstruktiven elastischen Beaufschlagung einnimmt, während die zweite Stellung durch eine aktive Einstellvorrichtung einstellbar ist.

5. Kupplungsvorrichtung (100) gemäß Anspruch 4, **dadurch gekennzeichnet, dass** die Einstellvorrichtung ein verstellbares Anschlagelement (110) für das Kupplungselement (102) aufweist.

6. Kupplungsvorrichtung (100) gemäß Anspruch 5, **dadurch gekennzeichnet, dass** das Anschlagelement (110) aktivierbar und deaktiverbar ist, wobei es im aktivierten Zustand einen Anschlag für das Kupplungselement (102) ausbildet und im deaktivierbaren Zustand keinen Anschlag für das Kupplungselement (102) ausbildet.

7. Kupplungsvorrichtung (100) gemäß einem der vorhergehenden Ansprüche, **dadurch gekennzeichnet, dass** die erste Stellung durch einen relativ großen Anpressdruck und die zweite Stellung durch einen relativ kleinen Anpressdruck gekennzeichnet ist.

8. Kupplungsvorrichtung (100) gemäß einem der vorhergehenden Ansprüche, **dadurch gekennzeichnet, dass** das Kupplungselement (102) Kupplungsflächen ausbildet, die zu den Kupplungsflächen des Antriebselements (14) und des Abtriebselements (40) parallel ausgerichtet sind.

9. Schaltvorrichtung, mittels der ein erstes Element (40) und ein zweites Element (22) in mindestens einer Drehausrichtung relativ zueinander positionierbar sind, **gekennzeichnet durch** eine Kupplungsvorrichtung (100) gemäß einem der vorhergehenden Ansprüche, wobei das erste Element (40) als Abtriebselement (40) der Kupplungsvorrichtung (100) dient, das bei geschlossener Kupplungsvorrichtung (100) von dem Antriebselement (14) der Kupplungsvorrichtung (100) relativ zu dem zweiten Element (22) in die Drehausrichtung drehbar ist, während beim Erreichen der Drehausrichtung die Kupplungsvorrichtung (100) lösbar ist.

10. Schaltvorrichtung gemäß Anspruch 9, **gekennzeichnet durch** ein Sperrelement (56) zur formschlüssigen, die Drehausrichtung sichernden Verbindung zwischen dem ersten Element (40) und dem zweiten Element (22).

11. Schaltvorrichtung gemäß Anspruch 10 mit mindestens einer Kupplungsvorrichtung (100) gemäß Anspruch 5 oder einem der von Anspruch 5 abhängigen Ansprüche, **dadurch gekennzeichnet, dass** das Sperrelement (56) als Anschlagelement (110) der Kupplungsvorrichtung (100) dient.

12. Schaltvorrichtung gemäß einem der Ansprüche 9 bis 11 mit mindestens zwei Kupplungsvorrichtungen (100) gemäß Anspruch 4 oder einem der von Anspruch 4 abhängigen Ansprüche, **dadurch gekennzeichnet, dass** die zweite Stellung des Kupplungselements (102) einer ersten der Kupplungsvorrichtungen (100) mittels der Einstellvorrichtung in einer ersten Drehausrichtung des ersten Elements (40) relativ zu dem zweiten Element (22) einstellbar ist und die zweite Stellung des Kupplungselements (102) einer zweiten der Kupplungsvorrichtungen (100) mittels der Einstellvorrichtung in einer zweiten Drehausrichtung des ersten Elements (40) relativ zu dem zweiten Element (22) einstellbar ist.

13. Schaltvorrichtung gemäß Anspruch 11 und 12, **dadurch gekennzeichnet, dass** das Sperrelement (56) der ersten Kupplungsvorrichtung (100) und das Sperrelement (56) der zweiten Kupplungsvorrichtung (100) mittels eines gemeinsamen Betätigungselements (64) alternierend betätigbar sind.

14. Schaltvorrichtung gemäß Anspruch 13, **dadurch gekennzeichnet, dass**
- in der ersten Drehausrichtung des ersten Elements (40) relativ zu dem zweiten Element (22), in der die zweite Stellung des Kupplungselements (102) der ersten Kupplungsvorrichtung (100) mittels der Einstellvorrichtung eingestellt ist, die zweite Stellung des Kupplungselements (102) der zweiten Kupplungsvorrichtung (100) mittels eines passiven Einstellelements (110) eingestellt ist und
- in der zweiten Drehausrichtung des ersten Elements (40) relativ zu dem zweiten Element (22), in der die zweite Stellung des Kupplungselements (102) der zweiten Kupplungsvorrichtung (100) mittels der Einstellvorrichtung eingestellt ist, die zweite Stellung des Kupplungselements (102) der ersten Kupplungsvorrichtung (100) mittels eines passiven Einstellelements (110) eingestellt ist.

15. Schaltvorrichtung gemäß Anspruch 13 oder 14, **dadurch gekennzeichnet, dass**
- in der ersten Drehausrichtung des ersten Elements (40) relativ zu dem zweiten Element (22) das Sperrelement (56) der zweiten Kupplungsvorrichtung (100) mittels des Betätigungselements (64) in einer Lösestellung gehalten ist, während das Sperrelement (56) der ersten Kupplungsvorrichtung (100) mittels eines zwischen den Sperrelementen (56) abgestützten Federelements (62) in eine Sperrstellung beaufschlagt ist und
- in der zweiten Drehausrichtung des ersten Elements (40) relativ zu dem zweiten Element (22) das Sperrelement (56) der ersten Kupplungsvorrichtung (100) mittels des Betätigungselements (64) in einer Lösestellung gehalten ist, während das Sperrelement (56) der zweiten Kupplungsvorrichtung (100) mittels des Federelements (62) in eine Sperrstellung beaufschlagt ist.

## Claims

1. Clutch device (100) for the as-needed transmission of a torque between a drive element (14) rotatable about an axis of rotation (28) and an output element (40) which can be rotated about an axis of rotation (50), whereupon these can be non-positively coupled by means of a clutch element (102), wherein the drive element (14) and the output element (40) respectively form a coupling surface, **characterized in that** the coupling surfaces form a coupling gap (104) with a gap width decreasing in a radial direction with respect to at least one of the axes of rotation (28, 50), wherein the clutch element (102) can be brought into a first position and a second position which differ with regard to the radial position within the coupling gap (104), and thus with regard to the contact pressure between the clutch element (102) and the coupling surfaces.

2. Clutch device (100) according to Claim 1, **characterized by** means for elastic charging of the clutch element (102).

3. Clutch device (100) according to Claims 1 or 2, **characterized in that** it is self-reinforcing.

4. Clutch device (100) according to any one of the preceding claims, **characterized in that** the clutch element (102) assumes the first position in the elastically uncharged state or as a result of a constructive elastic charging, whereas the second position can be set by an active setting device.

5. Clutch device (100) according to Claim 4, **characterized in that** the setting device has an adjustable stop element (110) for the clutch element (102).

6. Clutch device (100) according to Claim 5, **characterized in that** the stop element (110) can be activated and deactivated, wherein in the activated state it forms a stop for the clutch element (102), and in the deactivatable state it does not form a stop for the clutch element (102).

7. Clutch device (100) according to any one of the preceding claims, **characterized in that** the first position is **characterized by** a relatively high contact pressure and the second position by a relatively low contact pressure.

8. Clutch device (100) according to any one of the preceding claims, **characterized in that** the clutch element (102) forms coupling surfaces which are aligned parallel to the coupling surfaces of the drive element (14) and of the output element (40).

9. Switching device by means of which a first element (40) and a second element (22) can be positioned in at least one rotational alignment relative to one another, **characterized by** a clutch device (100) in accordance with any one of the preceding claims, wherein the first element (40) serves as an output element (40) of the clutch device (100), which element (40), if the clutch device (100) is closed, can be rotated into the rotational alignment by the drive element (14) of the clutch device (100) relative to the second element (22), whereas the clutch device (100) can be disengaged upon achieving the rotational alignment.

10. Switching device according to Claim 9, **characterized by** a locking element (56) for positive connection, securing the rotational alignment, between the first element (40) and the second element (22).

11. Switching device according to Claim 10, with at least one clutch device (100) according to Claim 5 or any one of the claims dependent on Claim 5, **characterized in that** the blocking element (56) serves as a stop element (110) of the clutch device (100).

12. Switching device according to any one of Claims 9 to 11, with at least two clutch devices (100) according to Claim 4 or any one of the claims dependent on Claim 4, **characterized in that** the second position of the clutch element (102) of a first of the clutch devices (100) can, by means of the setting device, be set in a first rotational alignment of the first element (40) relative to the second element (22), and the second position of the clutch element (102) of a second of the clutch devices (100) can, by means of the setting device, be set in a second rotational alignment of the first element (40) relative to the second element (22).

13. Switching device according to Claims 11 and 12, **characterized in that** the locking element (56) of the first clutch device (100) and the locking element (56) of the second clutch device (100) can be actuated alternately by means of a common actuating element (64).

14. Switching device according to Claim 13, **characterized in that**
- in the first rotational alignment of the first element (40) relative to the second element (22), in which the second position of the clutch element (102) of the first clutch device (100) is set by means of the setting device, the second position of the clutch element (102) of the second clutch device (100) is set by means of a passive setting element (110), and
- in the second rotational alignment of the first element (40) relative to the second element (22), in which the second position of the clutch element (102) of the second clutch device (100) is set by means of the setting device, the second position of the clutch element (102) of the first clutch device (100) is set by means of a passive setting element (110).

15. Switching device according to Claims 13 or 14, **characterized in that**
- in the first rotational alignment of the first element (40) relative to the second element (22), the locking element (56) of the second clutch device (100) is held in a release position by means of the actuating element (64) while the locking element (56) of the first clutch device (100) is charged by means of a spring element (62) supported between the locking elements (56), and
- in the second rotational alignment of the first element (40) relative to the second element (22), the locking element (56) of the first clutch device (100) is held in a release position by means of the actuating element (64) while the locking element (56) of the second clutch device (100) is charged by the spring element (62) in a locking position.

## Revendications

1. Dispositif d'accouplement (100) pour transmettre au besoin un couple entre un élément d'entraînement (14) pouvant tourner autour d'un axe de rotation (28) et un élément de sortie (40) pouvant tourner autour d'un axe de rotation (50), ces éléments pouvant à cette fin être accouplés à force au moyen d'un élément d'accouplement (102), l'élément d'entraînement (14) et l'élément de sortie (40) formant respectivement une surface d'accouplement, **caractérisé en ce que** les surfaces d'accouplement forment un interstice d'accouplement (104) présentant une largeur d'interstice diminuant dans une direction radiale par rapport à au moins l'un des axes de rotation (28, 50), l'élément d'accouplement (102) pouvant être amené à une première position et à une deuxième position qui sont différentes en termes de position radiale à l'intérieur de l'interstice d'accouplement (104) et par conséquent en termes de pression d'appui entre l'élément d'accouplement (102) et les surfaces d'accouplement.

2. Dispositif d'accouplement (100) selon la revendication 1, **caractérisé par** des moyens pour la sollicitation élastique de l'élément d'accouplement (102).

3. Dispositif d'accouplement (100) selon la revendication 1 ou 2, **caractérisé en ce qu'il** est conçu à renforcement autonome.

4. Dispositif d'accouplement (100) selon l'une quelconque des revendications précédentes, **caractérisé en ce que** l'élément d'accouplement (102) assume la première position dans l'état sans sollicitation élastique ou à la suite d'une sollicitation élastique constructive, tandis que la deuxième position peut être réglée par un dispositif de réglage actif.

5. Dispositif d'accouplement (100) selon la revendication 4, **caractérisé en ce que** le dispositif de réglage présente un élément de butée (110) réglable pour l'élément d'accouplement (102).

6. Dispositif d'accouplement (100) selon la revendication 5, **caractérisé en ce que** l'élément de butée (110) peut être activé et désactivé, dans l'état activé, il forme une butée pour l'élément d'accouplement (102) et, dans l'état désactivé, il ne forme pas de butée pour l'élément d'accouplement (102).

7. Dispositif d'accouplement (100) selon l'une quelconque des revendications précédentes, **caractérisé en ce que** la première position est **caractérisée par** une pression d'appui relativement forte et la deuxième position par une pression d'appui relativement faible.

8. Dispositif d'accouplement (100) selon l'une quelconque des revendications précédentes, **caractérisé en ce que** l'élément d'accouplement (102) forme des surfaces d'accouplement, qui sont orientées parallèlement aux surfaces d'accouplement de l'élément d'entraînement (14) et de l'élément de sortie (40).

9. Dispositif de changement de vitesses, au moyen duquel un premier élément (40) et un deuxième élément (22) peuvent être positionnés l'un par rapport à l'autre au moins dans une orientation de rotation, **caractérisé par** un dispositif d'accouplement (100) selon l'une quelconque des revendications précédentes, le premier élément (40) servant d'élément de sortie (40) du dispositif d'accouplement (100), qui, lorsque le dispositif d'accouplement (100) est fermé, peut être entraîné en rotation par l'élément d'entraînement (14) du dispositif d'accouplement (100) par rapport au deuxième élément (22) dans l'orientation de rotation, tandis que le dispositif d'accouplement (100) peut être libéré lorsque l'orientation de rotation est atteinte.

10. Dispositif de changement de vitesses selon la revendication 9, **caractérisé par** un élément de blocage (56) pour la liaison par complémentarité de formes sécurisant l'orientation de rotation entre le premier élément (40) et le deuxième élément (22).

11. Dispositif de changement de vitesses selon la revendication 10 comprenant au moins un dispositif d'accouplement (100) selon la revendication 5 ou l'une quelconque des revendications dépendant de la revendication 5, **caractérisé en ce que** l'élément de blocage (56) sert d'élément de butée (110) du dispositif d'accouplement (100).

12. Dispositif de changement de vitesses selon l'une quelconque des revendications 9 à 11 comprenant au moins deux dispositifs d'accouplement (100) selon la revendication 4 ou l'une quelconque des revendications dépendant de la revendication 4, **caractérisé en ce que** la deuxième position de l'élément d'accouplement (102) d'un premier des dispositifs d'accouplement (100) peut être réglée au moyen du dispositif de réglage dans une première orientation de rotation du premier élément (40) par rapport au deuxième élément (22) et la deuxième position de l'élément d'accouplement (102) d'un deuxième des dispositifs d'accouplement (100) peut être réglée au moyen du dispositif de réglage dans une deuxième orientation de rotation du premier élément (40) par rapport au deuxième élément (22).

13. Dispositif de changement de vitesses selon la revendication 11 et 12, **caractérisé en ce que** l'élément de blocage (56) du premier dispositif d'accouplement (100) et l'élément de blocage (56) du deuxième dispositif d'accouplement (100) peuvent être actionnés par alternance au moyen d'un élément d'actionnement commun (64).

14. Dispositif de changement de vitesses selon la revendication 13, **caractérisé en ce que**
- dans la première orientation de rotation du premier élément (40) par rapport au deuxième élément (22), dans laquelle la deuxième position de l'élément d'accouplement (102) du premier dispositif d'accouplement (100) est réglée au moyen du dispositif de réglage, la deuxième position de l'élément d'accouplement (102) du deuxième dispositif d'accouplement (100) est réglée au moyen d'un élément de réglage passif (110) et
- dans la deuxième orientation de rotation du premier élément (40) par rapport au deuxième élément (22), dans laquelle la deuxième position de l'élément d'accouplement (102) du deuxième dispositif d'accouplement (100) est réglée au moyen du dispositif de réglage, la deuxième position de l'élément d'accouplement (102) du premier dispositif d'accouplement (100) est réglée au moyen d'un élément de réglage passif (110).

15. Dispositif de changement de vitesses selon la revendication 13 ou 14, **caractérisé en ce que**
- dans la première orientation de rotation du premier élément (40) par rapport au deuxième élément (22), l'élément de blocage (56) du deuxième dispositif d'accouplement (100) est maintenu dans une position débloquée au moyen de l'élément d'actionnement (64), tandis que l'élément de blocage (56) du premier dispositif d'accouplement (100) est sollicité dans une position de blocage au moyen d'un élément de ressort (62) soutenu entre les éléments de blocage (56) et
- dans la deuxième orientation de rotation du premier élément (40) par rapport au deuxième élément (22), l'élément de blocage (56) du premier dispositif d'accouplement (100) est maintenu dans une position débloquée au moyen de l'élément d'actionnement (64), tandis que l'élément de blocage (56) du deuxième dispositif d'accouplement (100) est sollicité dans une position de blocage au moyen de l'élément de ressort (62).
